# FASCICULE DE BREVET EUROPEEN

(11) **EP 1 265 955 B1**
(45) Date de publication et mention de la délivrance du brevet: **15.10.2003**
(21) Numéro de dépôt: 00991272.6
(22) Date de dépôt: 27.12.2000
(51) Int. Cl.: C08K 5/5425, C08K 5/54, C08L 21/00

(54) **COMPOSITION DE CAOUTCHOUC POUR PNEUMATIQUE COMPORTANT UN AGENT DE COUPLAGE (CHARGE BLANCHE/ELASTOMERE) A FONCTION ESTER**
KAUTSCHUKZUSAMMENSETZUNG FÜR REIFEN, DIE EIN KUPPLUNGSMITTEL(ANORGANISCHER FÜLLSTOFF/ELASTOMER) MIT ESTERGRUPPEN ENTHÄLT
RUBBER COMPOSITION FOR TYRES, COMPRISING A COUPLING AGENT (WHITE FILLER/ELASTOMER) WITH AN ESTER FUNCTION

(30) Priorité: 30.12.1999 FR 9916844
(43) Date de publication de la demande: 18.12.2002
(73) Titulaire: Sociéte de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: PAGANO, Salvatore, F-63100 Clermont-Ferrand (FR); THONIER, Christel, F-63200 Mozac (FR); MIGNANI, Gérard, F-69008 Lyon (FR)
(74) Mandataire: Ribière, Joel
(86) Numéro de dépôt international: EP0013292
(87) Numéro de publication internationale: WO01049782

(56) Documents cités:
- EP-A- 0 370 551
- DE-A- 4 319 142
- US-A- 3 664 403

## Description

La présente invention se rapporte aux compositions de caoutchoucs diéniques renforcées d'une charge blanche, destinées particulièrement à la fabrication de pneumatiques ou de produits semi-finis pour pneumatiques, en particulier aux bandes de roulement de ces pneumatiques.

Depuis que les économies de carburant et la nécessité de protéger l'environnement sont devenues une priorité, il est souhaitable de produire des élastomères possédant de bonnes propriétés mécaniques et une hystérèse aussi faible que possible afin de pouvoir les mettre en oeuvre sous forme de compositions caoutchouteuses utilisables pour la fabrication de divers produits semi-finis entrant dans la constitution de pneumatiques tels que par exemple des sous-couches, dès gommes de calandrage ou de flancs ou des bandes de roulement et obtenir des pneumatiques aux propriétés améliorées, possédant notamment une résistance au roulement réduite.

Pour atteindre un tel objectif de nombreuses solutions ont été proposées, tout d'abord essentiellement concentrées sur l'utilisation d'élastomères modifiés au moyen d'agents tels que des agents de couplage, d'étoilage ou de fonctionnalisation, avec du noir de carbone comme charge renforçante dans le but d'obtenir une bonne interaction entre l'élastomère modifié et le noir de carbone. On sait en effet, d'une manière générale, que pour obtenir les propriétés de renforcement optimales conférées par une charge, il convient que cette dernière soit présente dans la matrice élastomérique sous une forme finale qui soit à la fois la plus finement divisée possible et répartie de la façon la plus homogène possible. Or, de telles conditions ne peuvent être réalisées que dans la mesure où la charge présente une très bonne aptitude, d'une part à s'incorporer dans la matrice lors du mélange avec l'élastomère et à se désagglomérer, d'autre part à se disperser de façon homogène dans l'élastomère.

De manière tout à fait connue, le noir de carbone présente de telles aptitudes, ce qui n'est en général pas le cas des charges blanches. Pour des raisons d'affinités réciproques, les particules de charge blanche ont une fâcheuse tendance, dans la matrice élastomérique, à s'agglomérer entre elles. Ces interactions ont pour conséquence néfaste de limiter la dispersion de la charge et donc les propriétés de renforcement à un niveau sensiblement inférieur à celui qu'il serait théoriquement possible d'atteindre si toutes les liaisons (charge blanche/élastomère) susceptibles d'être créées pendant l'opération de mélangeage, étaient effectivement obtenues ; ces interactions tendent d'autre part à augmenter la consistance à l'état cru des compositions caoutchouteuses et donc à rendre leur mise en oeuvre ("processabilité") plus difficile qu'en présence de noir de carbone.

L'intérêt pour les compositions de caoutchouc renforcées de charge blanche a été cependant fortement relancé avec la publication de la demande de brevet européen EP-A-0 501 227 qui divulgue une composition de caoutchouc diénique vulcanisable au soufre, renforcée d'une silice précipitée particulière du type hautement dispersible, qui permet de fabriquer un pneumatique ou une bande de roulement ayant une résistance au roulement nettement améliorée, sans affecter les autres propriétés en particulier celles d'adhérence, d'endurance et de résistance à l'usure.

La demande de brevet européen EP-A-0 810 258 divulgue quant à elle une composition de caoutchouc diénique renforcée d'une autre charge blanche particulière, en l'occurrence une alumine (Al₂O₃) spécifique à dispersibilité élevée, qui permet elle aussi l'obtention de pneumatiques ou de bandes de roulement ayant un tel excellent compromis de propriétés contradictoires.

L'utilisation de ces silices ou alumines spécifiques, hautement dispersibles, à titre de charge renforçante majoritaire ou non, a certes réduit les difficultés de mise en oeuvre des compositions de caoutchouc les contenant, mais cette mise en oeuvre reste néanmoins plus difficile que pour les compositions de caoutchouc chargées conventionnellement de noir de carbone.

En particulier, il est nécessaire d'utiliser un agent de couplage, encore appelé agent de liaison, qui a pour fonction d'assurer la connexion entre la surface des particules de charge blanche et l'élastomère, tout en facilitant la dispersion de cette charge blanche au sein de la matrice élastomérique.

Par agent de "couplage" (charge blanche/élastomère), on entend de manière connue un agent apte à établir une connexion suffisante, de nature chimique et/ou physique, entre la charge blanche et l'élastomère diénique ; un tel agent de couplage, au moins bifonctionnel, a par exemple comme formule générale simplifiée « Y-W-X », dans laquelle:
- Y représente un groupe fonctionnel (fonction "Y") qui est capable de se lier physiquement et/ou chimiquement à la charge blanche, une telle liaison pouvant être établie, par exemple, entre un atome de silicium de l'agent de couplage et les groupes hydroxyle (OH) de surface de la charge blanche (par exemple les silanols de surface lorsqu'il s'agit de silice);
- X représente un groupe fonctionnel (fonction "X") capable de se lier physiquement et/ou chimiquement à l'élastomère diénique, par exemple par l'intermédiaire d'un atome de soufre;
- W représente un groupe hydrocarboné permettant de relier Y et X.

Les agents de couplage ne doivent en particulier pas être confondus avec de simples agents de recouvrement de charge blanche qui de manière connue peuvent comporter la fonction Y active vis-à-vis de la charge blanche mais sont dépourvus de la fonction X active vis-à-vis de l'élastomère diénique.

Des agents de couplage, notamment (silice/élastomère diénique), ont été décrits dans un grand nombre de documents, les plus connus étant des alkoxysilanes bifonctionnels.

Ainsi il a été proposé dans la demande de brevet FR-A-2 094 859 d'utiliser un agent de couplage mercaptosilane pour la fabrication de bandes de roulement de pneumatiques. Il fut rapidement mis en évidence et il est aujourd'hui bien connu que les mercaptosilanes, et en particulier le γ-mercaptopropyltriméthoxysilane ou le γ-mercaptopropyltriéthoxysilane, sont susceptibles de procurer d'excellentes propriétés de couplage silice/élastomère, mais que l'utilisation industrielle de ces agents de couplage n'est pas possible en raison de la forte réactivité des fonctions -SH conduisant très rapidement au cours de la préparation de la composition de caoutchouc dans un mélangeur interne à des vulcanisations prématurées, appelées encore "grillage" ("scorching"), à des plasticités Mooney très élevées, en fin de compte à des compositions de caoutchouc quasiment impossibles à travailler et à mettre en oeuvre industriellement. Pour illustrer cette impossibilité d'utiliser industriellement de tels agents de couplage et les compositions de caoutchouc les contenant, on peut citer les documents FR-A-2 206 330, US-A-4 002 594.

Pour remédier à cet inconvénient, il a été proposé de remplacer ces agents de couplage mercaptosilanes par des alkoxysilanes polysulfurés, notamment des polysulfures de bis-alkoxyl(C₁-C₄)silylpropyle tels que décrits dans de nombreux brevets ou demandes de brevet (voir par exemple FR-A-2 206 330, US-A-3 842 111, US-A-3 873 489, US-A-3 978 103, US-A-3 997 581). Ces alkoxysilanes polysulfurés sont généralement considérés aujourd'hui comme les produits apportant, pour des vulcanisats chargés à la silice, le meilleur compromis en terme de sécurité au grillage, de facilité de mise en oeuvre et de pouvoir renforçant. Parmi ces polysulfures, doit être cité le tétrasulfure de bis 3-triéthoxysilylpropyle (en abrégé TESPT) qui est l'agent de couplage (charge blanche/élastomère diénique) connu comme étant le plus efficace, et donc le plus utilisé aujourd'hui, dans les compositions de caoutchouc pour pneumatiques, notamment celles destinées à constituer des bandes de roulement de ces pneumatiques ; il est commercialisé par exemple sous la dénomination "Si69" par le société Degussa. Ce produit a cependant pour inconvénient connu qu'il est fort onéreux et doit être utilisé le plus souvent dans une quantité relativement importante (voir par exemple brevets US-A-5 652 310, US-A-5 684 171, US-A-5 684 172).

Or, de manière inattendue, la Demanderesse a découvert lors de ses recherches que des agents de couplage spécifiques, porteurs d'une double liaison éthylénique activée particulière, peuvent présenter des performances de couplage supérieures à celles des alkoxysilanes polysulfurés, notamment à celles du TESPT, dans les compositions de caoutchouc pour pneumatique. Par ailleurs, ces agents de couplage spécifiques ne posent pas les problèmes précités de grillage prématuré et ceux de mise en oeuvre liés à une viscosité trop importante des compositions de caoutchouc à l'état cru, inconvénients posés par les mercaptosilanes.

Des alkoxysilanes à double liaison éthylénique activée avaient certes déjà été décrits, notamment dans des compositions de caoutchouc pour pneumatiques (voir par exemple demande JP1989/29385), mais ces agents de couplage avaient toujours montré jusqu'ici des performances de couplage insuffisantes, nettement inférieures en tout cas à celles offertes par les alkoxysilanes polysulfurés du type TESPT.

En conséquence, un premier objet de l'invention concerne une composition de caoutchouc vulcanisable au soufre, utilisable pour la fabrication de pneumatiques, à base d'au moins un élastomère diénique (composant A) ; une charge blanche à titre de charge renforçante (composant B) ; un agent de couplage (charge blanche/élastomère) porteur d'au moins deux fonctions notées "Y" et "X" (composant C), greffable d'une part sur la charge blanche au moyen de la fonction Y et d'autre part sur l'élastomère au moyen de la fonction X, cette composition étant caractérisée en ce que la fonction X de l'agent de couplage est une fonction ester d'un acide α-β insaturé porteur en position γ d'un groupe carbonyle, de formule générale (X): 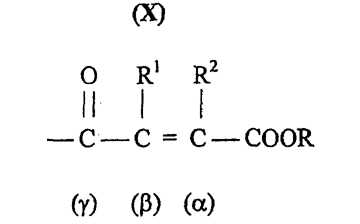 dans laquelle R, R¹ et R², identiques ou différents, représentent chacun un radical hydrocarboné monovalent, ou, dans le cas de R¹ et R², un atome d'hydrogène également.

L'invention a également pour objet l'utilisation d'une composition de caoutchouc conforme à l'invention pour la fabrication de pneumatiques ou pour la fabrication de produits semi-finis destinés à de tels pneumatiques, ces produits semi-finis étant choisis en particulier dans le groupe constitué par les bandes de roulement, les sous-couches destinées par exemple à être placées sous ces bandes de roulement, les nappes sommet, les flancs, les nappes carcasse, les talons, les protecteurs, les chambres à air et les gommes intérieures étanches pour pneu sans chambre.

L'invention a également pour objet ces pneumatiques et ces produits semi-finis eux-mêmes, lorsqu'ils comportent une composition de caoutchouc conforme à l'invention.

L'invention concerne en particulier les bandes de roulement de pneumatiques, ces bandes de roulement pouvant être utilisées lors de la fabrication de pneumatiques neufs ou pour le rechapage de pneumatiques usagés ; grâce aux compositions de l'invention, ces bandes de roulement présentent à la fois une faible résistance au roulement et une résistance élevée à l'usure.

L'invention concerne également un procédé de préparation d'une composition de caoutchouc utilisable pour la fabrication de pneumatiques, caractérisé en ce qu'on incorpore à:
(i) - au moins un élastomère diénique (composant A), au moins
(ii) - une charge blanche à titre de charge renforçante (composant B), et
(iii) - un agent de couplage (charge blanche/élastomère diénique) porteur de la fonction X de formule (X) précitée,
et en ce qu'on malaxe thermomécaniquement le tout, en une ou plusieurs étapes, jusqu'à atteindre une température maximale comprise entre 110°C et 190°C.

L'invention a d'autre part pour objet l'utilisation comme agent de couplage (charge blanche/élastomère), dans une composition de caoutchouc à base d'élastomère diénique renforcée d'une charge blanche, d'un composé porteur d'au moins deux fonctions notées "Y" et "X", greffable d'une part sur la charge blanche au moyen de la fonction Y et d'autre part sur l'élastomère au moyen de la fonction X, cette utilisation étant caractérisée en ce que ladite fonction X est une fonction ester d'un acide α-β insaturé porteur en position γ d'un groupe carbonyle, de formule générale (X) précitée.

L'invention a enfin pour objet un procédé pour coupler une charge blanche et un élastomère diénique, dans une composition de caoutchouc utilisable pour la fabrication de pneumatiques, ce procédé étant caractérisé en ce qu'on incorpore à:
(i) - au moins un élastomère diénique (composant A), au moins
(ii) - une charge blanche à titre de charge renforçante (composant B), et
(iii) - un agent de couplage (charge blanche/élastomère diénique) porteur d'au moins deux fonctions notées "Y" et "X" (composant C), greffable d'une part sur la charge blanche au moyen de la fonction Y et d'autre part sur l'élastomère au moyen de la fonction X, ladite fonction X consistant en une fonction ester d'un acide α-β insaturé porteur en position γ d'un groupe carbonyle et ayant pour formule générale la formule (X) précitée,
et en ce qu'on malaxe thermomécaniquement le tout, en une ou plusieurs étapes, jusqu'à atteindre une température maximale comprise entre 110°C et 190°C.

L'invention ainsi que ses avantages seront aisément compris à la lumière de la description et des exemples de réalisation qui suivent, ainsi que des figures relatives à ces exemples qui représentent des courbes de variation de module en fonction de l'allongement pour différentes compositions de caoutchouc diénique, conformes ou non à l'invention.

### I. MESURES ET TESTS UTILISES

Les compositions de caoutchouc sont caractérisées avant et après cuisson, comme indiqué ci-après.

### I-1. Plasticité Mooney

On utilise un consistomètre oscillant tel que décrit dans la norme AFNOR-NFT-43005 (Novembre 1980). La mesure de plasticité Mooney se fait selon le principe suivant : la composition à l'état cru (i.e., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unité Mooney" (UM, avec 1 UM=0,83 Newton.mètre).

### I-2. Temps de grillage

Les mesures sont effectuées à 130°C, conformément à la norme AFNOR-NFT-43004 (Novembre 1980). L'évolution de l'indice consistométrique en fonction du temps permet de déterminer le temps de grillage des compositions de caoutchouc, apprécié conformément à la norme précitée par le paramètre T5, exprimé en minutes, et défini comme étant le temps nécessaire pour obtenir une augmentation de l'indice consistométrique (exprimée en UM) de 5 unités au dessus de la valeur minimale mesurée pour cet indice.

### I-3. Essais de traction

Ces essais permettent de déterminer les contraintes d'élasticité et les propriétés à la rupture. Sauf indication différente, ils sont effectués conformément à la norme AFNOR-NFT-46002 de septembre 1988. On mesure en seconde élongation (i.e. après un cycle d'accommodation) les modules sécants nominaux (en MPa) à 10% d'allongement (M10), 100% d'allongement (M100) et 300% d'allongement (M300). On mesure également les contraintes à la rupture (en MPa) et les allongements à la rupture (en %). Toutes ces mesures de traction sont effectuées dans les conditions normales de température et d'hygrométrie selon la norme AFNOR-NFT-40101 (décembre 1979).

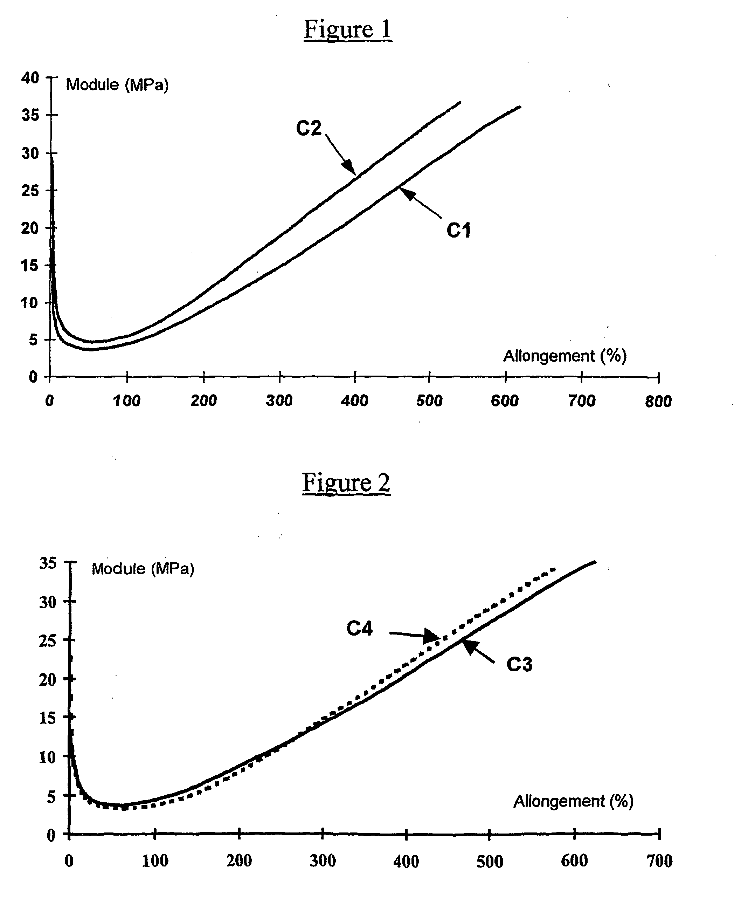

Un traitement des enregistrements de traction permet également de tracer la courbe de module en fonction de l'allongement (voir figures 1-3 annexées), le module utilisé ici étant le module sécant vrai mesuré en première élongation, calculé en se ramenant à la section réelle de l'éprouvette et non à la section initiale comme précédemment pour les modules nominaux.

### II. CONDITIONS DE REALISATION DE L'INVENTION

Les compositions de caoutchouc selon l'invention sont à base d'au moins chacun des constituants suivants: (i) au moins un élastomère diénique (composant A défini ci-après), (ii) au moins une charge blanche à titre de charge renforçante (composant B), (iii) au moins un composé spécifique (composant C défini ci-après) en tant qu'agent de couplage (charge blanche/élastomère diénique).

Bien entendu, par l'expression composition "à base de", il faut entendre une composition comportant le mélange et/ou le produit de réaction *in situ* des différents constituants utilisés, certains de ces composés étant susceptibles de, ou destinés à réagir entre eux, au moins partiellement, lors des différentes phases de fabrication de la composition, notamment au cours de sa vulcanisation.

### II-1. Elastomère diénique (composant A)

Par élastomère ou caoutchouc "diénique", on entend de manière connue un élastomère issu au moins en partie (i.e. un homopolymère ou un copolymère) de monomères diènes c'est-à-dire de monomères porteurs de deux doubles liaisons carbone-carbone, conjuguées ou non.

De manière générale, on entend ici par élastomère diénique "essentiellement insaturé" un élastomère diénique issu au moins en partie de monomères diènes conjugués, ayant un taux de motifs ou unités d'origine diénique (diènes conjugués) qui est supérieur à 15% (% en moles).

Bien qu'elle s'applique à tout type d'élastomère diénique, l'homme du métier du pneumatique comprendra que la présente invention est en premier lieu mise en oeuvre avec de tels élastomères diéniques essentiellement insaturés, en particulier:
(a) - tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone.

Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, l'élastomère diénique de la composition conforme à l'invention (composant A) est de préférence choisi dans le groupe constitué par les polybutadiènes (BR), le caoutchouc naturel (NR), les polyisoprènes de synthèse (IR), les différents copolymères de butadiène, les différents copolymères d'isoprène et les mélanges de ces élastomères.

Dans le groupe ci-dessus, les copolymères de butadiène ou d'isoprène sont de préférence choisis parmi les copolymères de butadiène-styrène, les copolymères de butadiène-isoprène, les copolymères d'isoprène-styrène, les copolymères de butadiène-styrène-isoprène et les mélanges de ces copolymères.

Parmi les polybutadiènes, conviennent en particulier ceux ayant une teneur en unités -1,2 comprise entre 4% et 80% ou ceux ayant une teneur en cis-1,4 supérieure à 80%. Parmi les polyisoprènes de synthèse, conviennent en particulier les cis-1,4-polyisoprènes.

Parmi les copolymères de butadiène ou d'isoprène, on entend en particulier les copolymères obtenus par copolymérisation d'au moins l'un de ces deux monomères avec un ou plusieurs composés vinyle-aromatique ayant de 8 à 20 atomes de carbone. A titre de composés vinyle-aromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène. Les copolymères peuvent contenir entre 99% et 20% en poids d'unités diéniques et entre 1% et 80% en poids d'unités vinyle-aromatiques.

Parmi les copolymères de butadiène, on citera notamment les copolymères de butadiène-styrène (dits "SBR"), les copolymères de butadiène-isoprène (BIR), de butadiène-styrène-isoprène (SBIR). Parmi les copolymères d'isoprène, on citera notamment les copolymères d'isobutène-isoprène (caoutchouc butyle - IIR), d'isoprène-styrène (SIR), ainsi que les copolymères d'isoprène-butadiène (BIR) ou d'isoprène-butadiène-styrène (SBIR) précités.

Parmi les copolymères de butadiène-styrène, conviennent en particulier ceux ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%. Parmi les copolymères de butadiène-isoprène, conviennent notamment ceux ayant une teneur en isoprène comprise entre 5% et 90% en poids et une température de transition vitreuse (Tg) de -40°C à -80°C. Quant aux copolymères isoprène-styrène, conviennent notamment ceux ayant une teneur en styrène comprise entre 5% et 50% en poids et une Tg comprise entre -25°C et -50°C. Dans le cas des copolymères de butadiène-styrène-isoprène, conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre -20°C et -70°C.

En résumé, à titre de composant A, convient particulièrement un élastomère diénique choisi dans le groupe des élastomères diéniques fortement insaturés constitué par les polybutadiènes, le caoutchouc naturel, les polyisoprènes de synthèse, les copolymères de butadiène-styrène, les copolymères de butadiène-isoprène, les copolymères d'isoprène-styrène, les copolymères de butadiène-styrène-isoprène et les mélanges de ces élastomères.

L'élastomère diénique choisi peut avoir toute microstructure qui est fonction des conditions de polymérisation utilisées, notamment de la présence ou non d'un agent modifiant et/ou randomisant et des quantités d'agent modifiant et/ou randomisant employées. Il peut être par exemple à blocs, statistique, séquencé, microséquencé, et être préparé en dispersion ou en solution ; il peut être couplé et/ou étoilé ou encore fonctionnalisé avec un agent de couplage et/ou d'étoilage ou de fonctionnalisation.

La composition conforme à l'invention est particulièrement destinée à une bande de roulement pour pneumatique, qu'il s'agisse d'un pneumatique neuf ou usagé (rechapage).

Dans le cas d'un pneumatique pour véhicule tourisme, le composant A est par exemple un SBR ou un coupage (mélange) SBR/BR, SBR/NR (ou SBR/IR), ou encore BR/NR (ou BR/IR). Dans le cas d'un élastomère SBR, on utilise notamment un SBR ayant une teneur en styrène comprise entre 20% et 30% en poids, une teneur en liaisons vinyliques de la partie butadiénique comprise entre 15% et 65%, une teneur en liaisons trans-1,4 comprise entre 15% et 75% et une Tg comprise entre -20°C et -55°C, ce copolymère SBR, de préférence préparé en solution, étant éventuellement utilisé en mélange avec un polybutadiène (BR) possédant de préférence plus de 90% de liaisons cis-1,4.

Dans le cas d'un pneumatique pour véhicule utilitaire, notamment pour véhicule "Poids-lourd" - i.e., métro, bus, engins de transport routier (camions, tracteurs, remorques), véhicules hors-la-route -, le composant A est par exemple choisi dans le groupe constitué par le caoutchouc naturel, les polyisoprènes de synthèse, les copolymères d'isoprène (isoprène-butadiène, isoprène-styrène, butadiène-styrène-isoprène) et les mélanges de ces élastomères. Dans un tel cas, le composant A peut être aussi constitué, en tout ou partie, d'un autre élastomère fortement insaturé tel que, par exemple, un élastomère SBR.

L'amélioration du couplage apportée par l'invention est particulièrement notable sur des compositions à base de caoutchouc naturel ou de polyisoprène de synthèse. On entend par là des compositions de caoutchouc dans lesquelles l'élastomère diénique (composant A) est constitué majoritairement (i.e., à plus de 50% en poids) de caoutchouc naturel, de polyisoprène de synthèse ou d'un mélange de ces élastomères.

Avantageusement, le composant A peut être constitué exclusivement de caoutchouc naturel, de polyisoprène de synthèse ou d'un mélange de ces élastomères.

Bien entendu les compositions de l'invention pourraient contenir, en plus du composant A précédemment défini, des élastomères diéniques autres que le composant A, des élastomères non diéniques, voire des polymères autres que des élastomères, par exemple des polymères thermoplastiques.

### II-2. Charge renforçante (composant B)

La charge blanche utilisée à titre de charge renforçante peut constituer la totalité ou une partie seulement de la charge renforçante totale, dans ce dernier cas associée par exemple à du noir de carbone.

De préférence, dans les compositions de caoutchouc conformes à l'invention, la charge blanche renforçante constitue la majorité, i.e. plus de 50 % en poids de la charge renforçante totale, plus préférentiellement plus de 80 % en poids de cette charge renforçante totale.

Dans la présente demande, on entend par "charge blanche renforçante" une charge "blanche" (i.e., inorganique ou minérale), quelle que soit sa couleur (par opposition au noir de carbone), parfois aussi appelée charge "claire", capable de renforcer à elle seule, sans autre moyen qu'un système de couplage intermédiaire, une composition de caoutchouc destinée à la fabrication de pneumatiques, en d'autres termes capable de remplacer dans sa fonction de renforcement une charge conventionnelle de noir de carbone de grade pneumatique.

Préférentiellement, la charge blanche renforçante est une charge minérale du type silice (SiO₂) ou alumine (Al₂O₃), ou un mélange de ces deux charges.

La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. Les silices précipitées hautement dispersibles (dites "HD") sont préférées, en particulier lorsque l'invention est mise en oeuvre pour la fabrication de pneumatiques présentant une faible résistance au roulement ; par silice hautement dispersible, on entend de manière connue toute silice ayant une aptitude importante à la désagglomération et à la dispersion dans une matrice élastomérique, observable de manière connue par microscopie électronique ou optique, sur coupes fines. Comme exemples non limitatifs de telles silices hautement dispersibles préférentielles, on peut citer la silice Perkasil KS 430 de la société Akzo, la silice BV3380 de la société Degussa, les silices Zeosil 1165 MP et 1115 MP de la société Rhodia, la silice Hi-Sil 2000 de la société PPG, les silices Zeopol 8741 ou 8745 de la Société Huber, des silices précipitées traitées telles que par exemple les silices "dopées" à l'aluminium décrites dans la demande EP-A-0 735 088.

L'alumine renforçante utilisée préférentiellement est une alumine hautement dispersible ayant une surface BET allant de 30 à 400 m²/g, plus préférentiellement entre 60 et 250 m²/g, une taille moyenne de particules au plus égale à 500 nm, plus préférentiellement au plus égale à 200 nm, telle que décrite dans la demande EP-A-0 810 258 précitée. Comme exemples non limitatifs de telles alumines renforçantes, on peut citer notamment les alumines A125, CR125, D65CR de la société Baïkowski.

L'état physique sous lequel se présente la charge blanche renforçante est indifférent, que ce soit sous forme de poudre, de microperles, de granulés, ou encore de billes. Bien entendu on entend également par charge blanche renforçante des mélanges de différentes charges blanches renforçantes, en particulier de silices et/ou d'alumines hautement dispersibles telles que décrites ci-dessus.

Lorsque les compositions de caoutchouc de l'invention sont utilisées comme bandes de roulement de pneumatiques, la charge blanche renforçante utilisée, en particulier s'il s'agit de silice, a de préférence une surface BET comprise entre 60 et 250 m²/g, plus préférentiellement comprise entre 80 et 200 m²/g.

La charge blanche renforçante peut être également utilisée en coupage (mélange) avec du noir de carbone. Comme noirs de carbone conviennent tous les noirs de carbone, notamment les noirs du type HAF, ISAF, SAF, conventionnellement utilisés dans les pneus et particulièrement dans les bandes de roulement des pneus. A titre d'exemples non limitatifs de tels noirs, on peut citer les noirs N115, N134, N234, N339, N347, N375. La quantité de noir de carbone présente dans la charge renforçante totale peut varier dans de larges limites, cette quantité de noir de carbone étant préférentiellement inférieure à la quantité de charge blanche renforçante présente dans la composition de caoutchouc.

De manière préférentielle, le taux de charge renforçante totale (charge blanche renforçante plus noir de carbone le cas échéant) est compris entre 10 et 200 pce, plus préférentiellement entre 20 et 150 pce, l'optimum étant différent selon les applications visées ; en effet, le niveau de renforcement attendu sur un pneumatique vélo, par exemple, est de manière connue nettement inférieur à celui exigé sur un pneumatique apte à rouler à grande vitesse de manière soutenue, par exemple un pneu moto, un pneu pour véhicule de tourisme ou pour véhicule utilitaire tel que Poids lourd.

Pour les bandes de roulement de pneumatiques aptes à rouler à grande vitesse, la quantité de charge blanche renforçante, en particulier s'il s'agit de silice, est de préférence comprise entre 30 et 120 pce, plus préférentiellement comprise entre 40 et 100 pce.

Dans le présent exposé, la surface spécifique BET est déterminée de manière connue, selon la méthode de Brunauer-Emmet-Teller décrite dans "The Journal of the American Chemical Society" Vol. 60, page 309, février 1938 et correspondant à la norme AFNOR-NFT-45007 (novembre 1987) ; la surface spécifique CTAB est la surface externe déterminée selon la même norme AFNOR-NFT-45007 de novembre 1987.

### II-3. Agent de couplage (composant C)

De manière connue, comme déjà expliqué précédemment, un agent de couplage (charge blanche/élastomère diénique) est porteur d'au moins deux fonctions, notées ici "Y" et "X", lui permettant de pouvoir se greffer, d'une part sur la charge blanche renforçante au moyen de la fonction Y, d'autre part sur l'élastomère diénique au moyen de la fonction X.

Une caractéristique essentielle de l'agent de couplage utilisé dans les compositions de caoutchouc de l'invention est que sa fonction X consiste en une fonction ester d'un acide α-β insaturé porteur en position γ d'un groupe carbonyle, de formule générale (X): 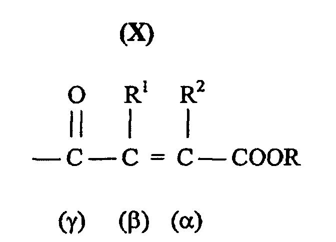 dans laquelle R, R¹ et R², identiques ou différents, représentent chacun un radical hydrocarboné monovalent, choisi de préférence parmi les alkyles, linéaires ou ramifiés, ayant de 1 à 6 atomes de carbone, ou, dans le cas de R¹ et R², un atome d'hydrogène également.

La fonction Y de cet agent de couplage est avantageusement une fonction alkoxysilyle ; par fonction alkoxysilyle, on doit entendre de manière connue un ou plusieurs groupe(s) (OR') fixé(s) sur un atome de silicium, R' étant un groupe hydrocarboné monovalent, linéaire ou ramifié. R' comporte de préférence de 1 à 18 atomes de carbone; il est plus préférentiellement choisi parmi les alkyles en C₁-C₁₈, les alkoxyalkyles en C₂-C₁₈, les cycloalkyles en C₅-C₁₈ ou les aryles en C₆-C₁₈, en particulier parmi les alkyles en C₁-C₆, les alkoxyalkyles en C₂-C₆, les cycloalkyles en C₅-C₈ ou un radical phényle.

A titre d'exemples de fonctions X de formule (X) conviennent particulièrement les fonctions ester-maléamique de formule (I) ou ester-fumaramique de formule (II) ci-dessous: 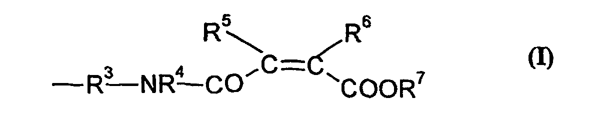 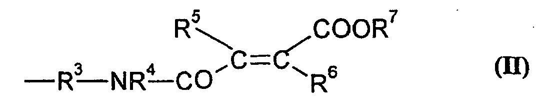 dans lesquelles:
- R³ est un radical hydrocarboné divalent alkylène, linéaire ou ramifié, ayant de préférence de 1 à 10 atomes de carbone;
- les symboles R⁴, R⁵ et R⁶, identiques ou différents entre eux, représentent chacun un atome d'hydrogène ou un groupe hydrocarboné monovalent choisi de préférence parmi les alkyles, linéaires ou ramifiés, ayant de 1 à 6 atomes de carbone ou un radical phényle;
- R⁷ est un groupe hydrocarboné monovalent choisi de préférence parmi les alkyles, linéaires ou ramifiés, ayant de 1 à 6 atomes de carbone ou un radical phényle;

Ainsi, à titre d'agent de couplage convenant avantageusement pour la mise en oeuvre de l'invention, peut être utilisé, sans que la définition ci-après soit limitative, un agent de couplage alkoxysilane répondant à la formule générale (III) qui suit: 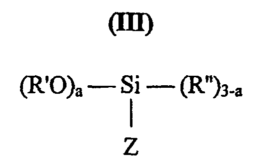 dans laquelle:
- les symboles R', identiques ou différents entre eux, représentent chacun un groupe hydrocarboné monovalent choisi parmi les alkyles, linéaires ou ramifiés, ayant de 1 à 4 atomes de carbone, les alkoxyalkyles, linéaires ou ramifiés, ayant de 2 à 6 atomes de carbone, les cycloalkyles ayant de 5 à 8 atomes de carbone, ou un radical phényle ;
- les symboles R", identiques ou différents entre eux, représentent chacun un groupe hydrocarboné monovalent choisi parmi les alkyles, linéaires ou ramifiés, ayant de 1 à 6 atomes de carbone, les cycloalkyles ayant de 5 à 8 atomes de carbone, ou un radical phényle ;
- Z = -L-X ; L, relié à l'atome de Silicium, étant un groupe de liaison divalent, linéaire ou ramifié, ayant de préférence de 1 à 16 atomes de carbone, comportant éventuellement un ou plusieurs hétéroatomes choisis de préférence parmi S, O ou N;
- a est égal à 1, 2 ou 3.

L'homme du métier comprendra aisément que dans la formule générale (III) ci-dessus, la fonction alkoxysilyle (fonction Y) mentionnée supra est symbolisée par le groupe (R'O)ₐ relié à l'atome de Silicium, tandis que le groupe de liaison L est l'enchaînement nécessaire pour lier le silane d'origine à l'ester de l'acide, dont la formule dépend (par exemple: L = -R³-NR⁴- pour les formules I et II supra).

Dans les formules I, II et III ci-dessus, on a de préférence les caractéristiques suivantes qui sont vérifiées:
- les radicaux R' de la formule (III) sont choisis parmi les radicaux : méthyle, éthyle, n-propyle, isopropyle, n-butyle, CH₃OCH₂- , CH₃OCH₂CH₂- , CH₃OCH(CH₃)CH₂- ;
- les radicaux R" de la formule (III) sont choisis parmi les radicaux méthyle, éthyle, n-propyle, isopropyle, n-butyle, n-pentyle, cyclohexyle ou phényle;
- le radical R³ des formules (I) ou (II) représente un reste alkylène répondant aux formules suivantes: -(CH₂)₂-, -(CH₂)₃-, -(CH₂)₄- , -CH₂-CH(CH₃)-, -(CH₂)₂-CH(CH₃)-(CH₂)- , -(CH₂)₃-O-(CH₂)₃- , -(CH₂)₃-O-CH₂-CH(CH₃)-CH₂- ;
- les radicaux R⁴, R⁵ et R⁶ des formules (I) ou (II) sont choisis parmi l'hydrogène ou les radicaux méthyle, éthyle, n-propyle, isopropyle ou n-butyle;
- le radical R⁷ des formules (I) ou (II) est choisi parmi les radicaux méthyle, éthyle, n-propyle ou isopropyle.

Plus préférentiellement encore, les caractéristiques suivantes sont vérifiées:
- les radicaux R' sont choisis parmi les radicaux méthyle, éthyle, n-propyle et isopropyle;
- les radicaux R" sont des radicaux méthyle;
- R³ est un reste -(CH₂)₂- ou -(CH₂)₃-;
- les radicaux R⁴, R⁵ et R⁶ sont choisis parmi l'hydrogène ou un radical méthyle;
- le radical R⁷ est un méthyle.

A titre d'exemple préférentiel d'un tel silane de formule générale (III), on citera l'alkoxysilane de formule (III-1) ci-après: 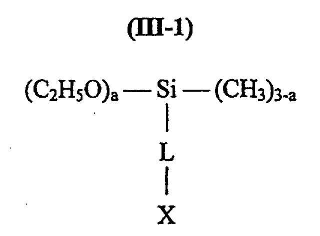 dans laquelle:
- L = -R³-NR⁴- (selon formules I et II supra);
- X est la fonction ester-maléamique de formule (I) ou ester-fumaramique de formule (II) précitées.

Comme composés préférentiels répondant à la formule (III-1) ci-dessus, on citera notamment l'ester méthylique de l'acide N[γ-propyl(méthyl-diéthoxy)silane] maléamique (formule III-2 ci-dessous) ou encore l'ester méthylique de l'acide N[γ-propyl(méthyl-diéthoxy)silane] fumaramique (formule III-3 ci-dessous): 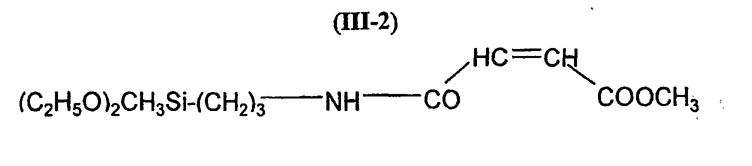 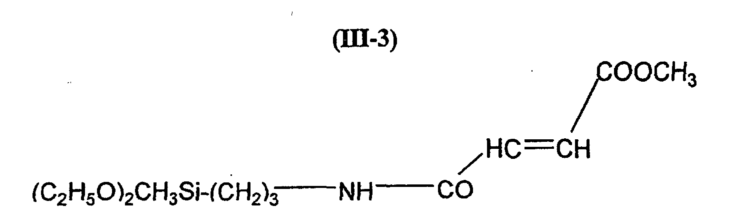 soit un agent de couplage avec:
- a = 2 ;
- L = -(CH₂)₃-NH- ;
- X = -CO-CH=CH-COOCH₃ ;
- Z = -L-X = -(CH₂)₃-NH-CO-CH=CH-COOCH₃.

Les silanes fonctionnalisés de formule générale (III) supra, et en particulier ceux de formule particulière (III-2) ou (III-3) ci-dessus, porteurs de fonctions ester d'acide maléamique ou ester d'acide fumaramique, ont montré une très bonne réactivité vis-à-vis des élastomères diéniques utilisés dans les compositions de caoutchouc pour pneumatiques.

Ils peuvent être préparés, selon une voie de synthèse préférée, par formation d'une fonction amide en additionnant un silane aminé (1) sur un dérivé ester activé (6) obtenu à partir d'un mono-ester de l'acide maléique (5), en réalisant les étapes suivantes:
- (1) alcoolyse de l'anhydride maléique (2) par l'alcool R⁷-OH,
- (2) activation de la fonction acide carboxylique du mono-ester de l'acide maléique (5) obtenu, en utilisant les diverses méthodes d'activation décrites dans le domaine de la synthèse peptidique, pour conduire au dérivé ester activé (6), puis
- (3) addition du silane aminé (1) sur ledit dérivé ester activé (6) pour conduire au composé constitué essentiellement de l'organosilane fonctionnalisé souhaité (4), en appliquant le schéma de synthèse suivant (où le symbole A du dérivé (6) représente une fonction activante):

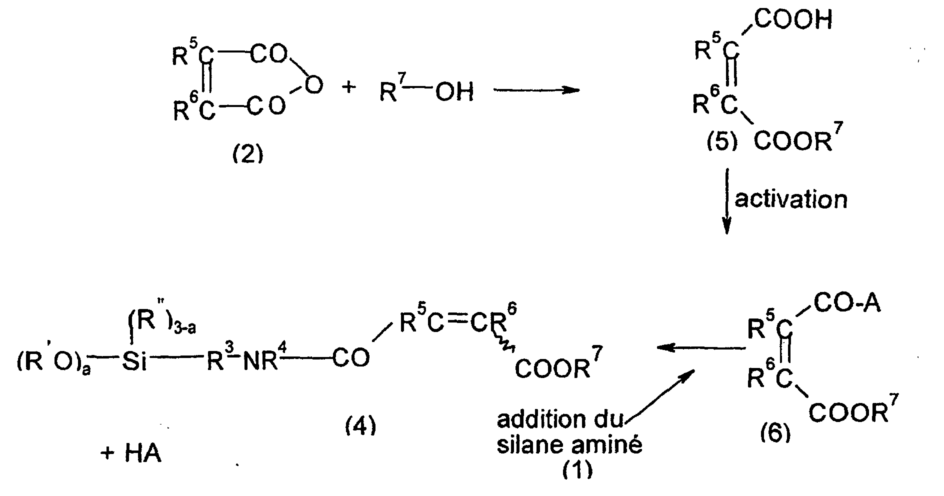

En ce qui concerne la manière pratique de mettre en oeuvre les étapes (1) à (3), on se reportera pour plus de détails aux contenus des documents suivants qui décrivent, éventuellement au départ d'autres réactifs, des modes opératoires applicables à la conduite des différentes étapes du procédé de synthèse considéré:
- pour l'étape (1): cf. notamment J. Med. Chem., 1983, 26, pages 174-181;
- pour les étapes (2) et (3): cf. John JONES, Amino Acid and Peptide-Synthesis, pages 25-41, Oxford University Press, 1994.

Afin de permettre l'addition de la fonction amine sur la fonction acide carboxylique du mono-ester de l'acide maléique (5), il convient au préalable de procéder à l'activation de ladite fonction acide carboxylique.

Cette activation peut se faire en particulier en mettant en oeuvre les méthodes suivantes:
(i) activation par réaction avec un alkylchloroformiate, selon le schéma (fonction activante située à droite du groupement T-CO-, soit dans le cas présent -O-CO-OR⁸): 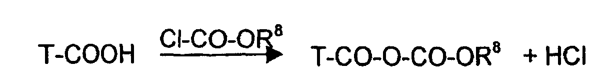 où T représente le reste -R⁵C=CR⁶-COOR⁷ et R⁸ représente un radical alkyle linéaire ayant par exemple 1 à 3 atomes de carbone ;
(2i) activation par réaction avec le dicyclohexylcarbodiimide (DCCI) en présence de préférence de N-hydroxysuccinimide (HO-SN), selon le schéma: 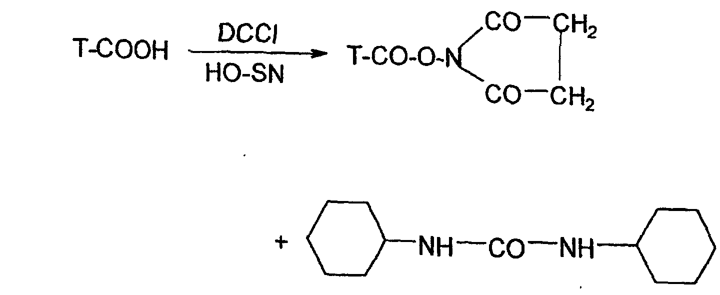
(3i) activation par réaction avec un composé chloré comme par exemple le chlorure de thionyle, le pentachlorure de phosphore, selon le schéma (fonction activante: -Cl):

Les méthodes d'activation (i) et (2i) sont spécialement préférées.

Comme exemples concrets d'organoaminosilanes (1), peuvent être cités ceux de formules données ci-après:
(C₂R₅O)₂CH₃Si(CH₂)₃NH₂
(C₂H₅O)₃Si(CH₂)₃NH₂
(CH₃O)₂CH₃Si(CH₂)₃NH₂
(CH₃O)₃Si(CH₂)₃NH₂
(CH₃O)₃Si(CH₂)₄NH₂
(C₂H₅O)₃Si(CH₂)₄NH₂
(CH₃O)₂CH₃SiCH₂CH₂CH(CH₃)CH₂NH₂
(CH₃O)₃Si(CH₂)₃O(CH₂)₃NH₂.

Les composants C précédemment décrits, porteurs d'une fonction alkoxysilyle et d'une fonction ester de formule (X), se sont révélés suffisamment efficaces à eux seuls et peuvent constituer avantageusement le seul agent de couplage présent dans les compositions de l'invention.

La teneur en composant (C) est de préférence comprise entre 0,5% et 20% en poids par rapport au poids de charge blanche renforçante. En dessous des taux minima indiqués l'effet risque d'être insuffisant, alors qu'au delà des taux maxima indiqués ci-dessus on n'observe généralement plus d'amélioration du couplage, alors que les coûts de la composition augmentent. Pour ces raisons, cette teneur en composant C est de préférence comprise entre 3 et 15% en poids par rapport au poids de charge blanche renforçante, encore plus préférentiellement comprise entre 5 et 12%.

En tout état de cause, l'homme du métier saura ajuster la teneur en composant C en fonction de l'application visée, de la nature de l'élastomère utilisé et de la quantité de charge blanche renforçante.

Bien entendu, afin de réduire les coûts des compositions de caoutchouc, il est souhaitable d'en utiliser le moins possible, c'est-à-dire le juste nécessaire pour un couplage suffisant entre l'élastomère diénique et la charge blanche renforçante. L'efficacité de la fonction X sélectionnée permet dans un grand nombre de cas d'utiliser le composant C à un taux préférentiel inférieur à 10%, plus préférentiellement inférieur à 8% par rapport au poids de charge blanche renforçante.

Enfin, on notera que l'agent de couplage (composant C) précédemment décrit pourrait être préalablement greffé (via la fonction "Y") sur la charge blanche renforçante, la charge ainsi "précouplée" pouvant être liée ultérieurement à l'élastomère diénique, par l'intermédiaire de la fonction libre "X".

### II-4. Additifs divers

Bien entendu, les compositions de caoutchouc conformes à l'invention comportent également tout ou partie des additifs habituellement utilisés dans les compositions de caoutchouc diénique destinées à la fabrication de pneumatiques, comme par exemple des plastifiants, des agents de protection, un système de réticulation à base soit de soufre, soit de donneurs de soufre, des accélérateurs de vulcanisation, des huiles d'extension, etc ... A la charge blanche renforçante peut être également associée, si besoin est, une charge blanche conventionnelle peu ou non renforçante, par exemple des particules d'argiles, de bentonite, talc, craie, kaolin, oxydes de titane.

Les compositions de caoutchouc conformes à l'invention peuvent également contenir, en complément des agents de couplage (composant C) précédemment décrits, des agents de recouvrement de la charge blanche renforçante, comportant par exemple la seule fonction Y, ou plus généralement des agents d'aide à la mise en oeuvre susceptibles de manière connue, grâce à une amélioration de la dispersion de la charge blanche dans la matrice de caoutchouc et à un abaissement de la viscosité des compositions, d'améliorer leur faculté de mise en oeuvre à l'état cru, ces agents étant par exemple des alkylalkoxysilanes (notamment des alkyltriéthoxysilanes), des polyols, des polyéthers (par exemple des polyéthylèneglycols), des amines primaires, secondaires ou tertiaires (par exemple des trialcanol-amines), des polyorganosiloxanes hydroxylés ou hydrolysables, par exemple des α,ω-dihydroxy-polyorganosiloxanes (notamment des α,ω-dihydroxy-polydiméthylsiloxanes). Les compositions conformes à l'invention pourraient contenir aussi d'autres agents de couplage que ceux correspondant au composant C, par exemple des alkoxysilanes polysulfurés.

### II-6. Préparation des compositions de caoutchouc

Les compositions sont fabriquées dans des mélangeurs appropriés, en utilisant deux phases de préparation successives bien connues de l'homme du métier : une première phase de travail ou malaxage thermo-mécanique (parfois qualifiée de phase "non-productive") à haute température, jusqu'à une température maximale (notée Tₘₐₓ) comprise entre 110°C et 190°C, de préférence entre 130°C et 180°C, suivie d'une seconde phase de travail mécanique (parfois qualifiée de phase "productive") à plus basse température, typiquement inférieure à 110°C, par exemple entre 60°C et 100°C, phase de finition au cours de laquelle est incorporé le système de réticulation ou vulcanisation ; de telles phases ont été décrites par exemple dans la demande EP-A-0 501 227 précitée.

Le procédé de fabrication selon l'invention est caractérisé en ce qu'au moins le composant B et le composant C sont incorporés par malaxage au composant A au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre une température maximale comprise entre 110°C et 190°C, de préférence comprise entre 130°C et 180°C.

A titre d'exemple, la première phase (non-productive) est conduite en une seule étape thermomécanique au cours de laquelle on introduit, dans un mélangeur approprié tel qu'un mélangeur interne usuel, tous les constituants de base nécessaires, les éventuels agents de recouvrement ou de mise en oeuvre complémentaires et autres additifs divers, à l'exception du système de vulcanisation. Une seconde étape de travail thermomécanique peut être ajoutée dans ce mélangeur interne, après tombée du mélange et refroidissement intermédiaire (température de refroidissement de préférence inférieure à 100°C), dans le but de faire subir aux compositions un traitement thermique complémentaire, notamment pour améliorer encore la dispersion, dans la matrice élastomérique, de la charge blanche renforçante et de son agent de couplage. La durée totale du malaxage, dans cette phase non-productive, est de préférence comprise entre 2 et 10 minutes.

Après refroidissement du mélange ainsi obtenu, on incorpore alors le système de vulcanisation à basse température, généralement dans un mélangeur externe tel qu'un mélangeur à cylindres ; le tout est alors mélangé (phase productive) pendant quelques minutes, par exemple entre 5 et 15 minutes.

La composition finale ainsi obtenue est ensuite calandrée, par exemple sous la forme d'une feuille, d'une plaque ou encore d'un profilé de caoutchouc utilisable pour la fabrication de semi-finis tels que des bandes de roulement.

La vulcanisation (ou cuisson) est conduite de manière connue à une température généralement comprise entre 130°C et 200°C, pendant un temps suffisant qui peut varier par exemple entre 5 et 90 min en fonction notamment de la température de cuisson, du système de vulcanisation adopté et de la cinétique de vulcanisation de la composition considérée.

Il va de soi que l'invention concerne les compositions de caoutchouc précédemment décrites tant à l'état dit "cru" (i.e., avant cuisson) qu'à l'état dit "cuit" ou vulcanisé (i.e., après réticulation ou vulcanisation).

Bien entendu, les compositions conformes à l'invention peuvent être utilisées seules ou en coupage (i.e., en mélange) avec toute autre composition de caoutchouc utilisable pour la fabrication de pneumatiques.

### III. EXEMPLES DE REALISATION DE L'INVENTION

### III-1. Synthèse de l'agent de couplage

Cet exemple décrit la préparation d'agents de couplage de formule (III) comportant une fonction ester-maléamique ou ester-fumaramique. La synthèse est réalisée comme suit, en passant par l'intermédiaire d'un dérivé ester activé.

### 1) Alcoolyse de l'anhydride maléique:

Dans un réacteur tétracol de 2 litres, l'anhydride maléique est introduit (698,1 g, soit 7,12 moles), puis il est fondu par chauffage du réacteur à l'aide d'un bain d'huile porté à 70°C. Une fois la totalité de l'anhydride fondue, on introduit, sous agitation, du méthanol (221,4 g, soit 6,92 moles) via une ampoule de coulée. Le milieu est ensuite laissé sous agitation pendant 20 heures à 23°C, puis il est dévolatilisé en établissant une pression réduite de 10.10² Pa pendant 1 heure, et enfin il est filtré sur papier-filtre. On récupère ainsi 786,9 g de monométhylester de l'acide maléique de formule (rendement : 86%) :

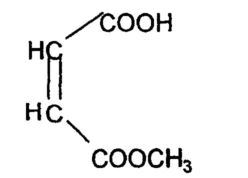

### 2) Préparation du dérivé ester activé, puis couplage avec le silane aminé:

Dans un réacteur tricol de 2 litres, équipé d'une agitation mécanique, d'un réfrigérant et placé sous atmosphère d'argon, le monométhylester de l'acide maléique (219,17 g, soit 1,685 moles) est introduit et dissout dans le dichlorométhane CH₂Cl₂ (950 g). Le milieu réactionnel est refroidit à -60°C, puis de la N-méthylmorpholine (187,58 g, soit 1,854 moles) est ajoutée progressivement sur une période de 4 minutes. Au bout de ce temps, en opérant à cette même température de -60°C, on coule progressivement de l'éthylchloroformiate Cl-CO-OC₂H₅ (201,21 g soit 1,854 moles) sur une période de 10 minutes.

Le milieu réactionnel ainsi obtenu, qui renferme le dérivé ester activé de formule: 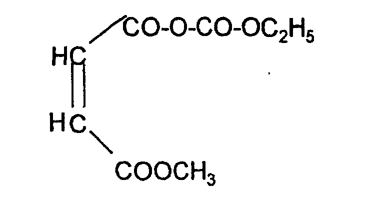 est abandonné pendant 10 minutes à la température où il se trouve.

Ensuite, le silane aminé de formule (C₂H₅O)₂CH₃Si(CH₂)₃NH₂ (322,43 g, soit 1,685 moles) est coulé progressivement en 15 minutes via une ampoule de coulée. Le mélange réactionnel est laissé sous agitation en laissant la température de la masse remonter doucement vers la température ambiante de 23°C. Une fois arrivé à température ambiante, le milieu est encore agité pendant 2 heures à cette température, puis il est filtré sur verre-fritté et le solvant est finalement éliminé par évaporation.

Le composé résiduel ainsi obtenu est ensuite purifié par chromatographie sur gel de silice en utilisant comme éluant un mélange heptane/acétate d'éthyle (50/50 en volume) ; l'éluant est finalement éliminé par évaporation.

Le composé purifié ainsi obtenu est soumis à des analyses par RMN du proton et par RMN du silicium (²⁹Si) qui révèlent que ce composé se compose de:
- environ 82% molaire de motif codé D(OC₂H₅)₂ de formule CH₃ZSi(OC₂H₅)₂ appartenant au silane à fonction ester-maléamique de formule (III-2) (présent à raison de 83,2% en poids): 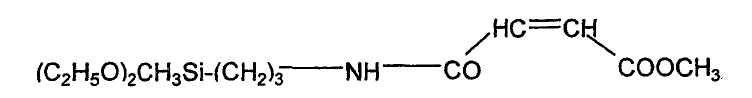
- environ 9% molaire de motif codé D(OC₂H₅)₂ de formule CH₃ZSi(OC₂H₅)₂ appartenant au silane à fonction ester-fumaramique de formule (III-3) (présent à raison de 9,2% en poids): 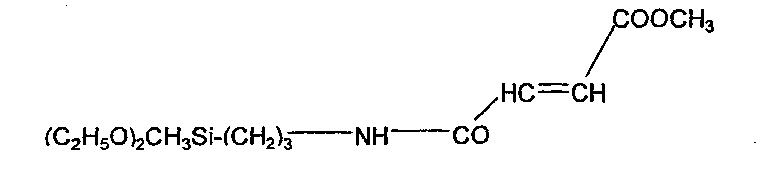
- et environ 9% molaire de motifs codés D(OC₂H₅) et D de formules CH₃Z (OC₂H₅)SiO_{1/2} et CH₃ZSiO_{2/2} appartenant à l'oligomère de formule (présent à raison de 7,6% en poids): 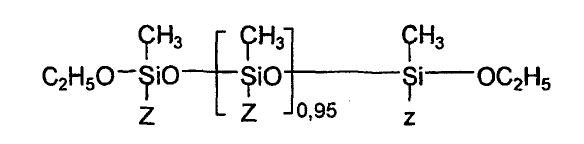
avec, par conséquent, pour ces 3 formules:

Z = -(CH₂)₃-NH-CO-CH=CH-COOCH₃

soit

L = -(CH₂)₃-NH-

et

X = -CO-CH=CH-COOCH₃ .

### III-2. Préparation des compositions de caoutchouc

On procède pour les essais qui suivent de la manière suivante: on introduit dans un mélangeur interne, rempli à 70% et dont la température initiale de cuve est d'environ 60°C, l'élastomère diénique ou le mélange d'élastomères diéniques, la charge renforçante, l'agent de couplage, puis les divers autres ingrédients à l'exception du système de vulcanisation. On conduit alors un travail thermomécanique (phase non-productive) en deux étapes (durée totale du malaxage égale à environ 7 min), jusqu'à atteindre une température maximale de "tombée" d'environ 165°C. On récupère le mélange ainsi obtenu, on le refroidit puis on ajoute soufre et sulfénamide sur un mélangeur externe (homo-finisseur) à 30°C, en mélangeant le tout (phase productive) pendant 3 à 4 minutes.

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit sous la forme de profilés utilisables directement, après découpage et/ou assemblage aux dimensions souhaitées, par exemple comme produits semi-finis pour pneumatiques, en particulier comme bandes de roulement.

Dans les essais qui suivent, la charge blanche renforçante (silice et/ou alumine) constitue la totalité de la charge renforçante, utilisée à un taux préférentiel compris entre 30 et 80 pce ; mais une fraction de cette charge renforçante, de préférence minoritaire, pourrait être remplacée par du noir de carbone.

### III-3. Essais de caractérisation

### A) Essai 1

Cet essai a pour but de démontrer les performances de couplage (charge blanche/élastomère diénique) améliorées dans une composition conforme à l'invention, comparée à une composition de l'art antérieur utilisant un agent de couplage conventionnel TESPT.

On prépare pour cela deux compositions de caoutchouc à base de caoutchouc naturel et renforcées de silice (silice précipitée hautement dispersible), ces compositions étant destinées à des bandes de roulement pour pneumatiques Poids-lourd.

Ces deux compositions sont identiques aux différences près qui suivent:
- composition N°1 : agent de couplage TESPT conventionnel;
- composition N°2 : agent de couplage synthétisé ci-dessus, constitué majoritairement (82 mol %) de l'ester méthylique de l'acide N[γ-propyl(méthyl-diéthoxy)silane] maléamique (formule III-2).

Les deux agents de couplage testés sont utilisés à un taux isomolaire en silicium, c'est-à-dire qu'on utilise, quelle que soit la composition testée, le même nombre de moles de fonctions Y (Y = Si(OR')ₐ ; a = 1, 2 ou 3) réactives vis-à-vis de la silice et de ses groupes hydroxyles de surface.

Par rapport au poids de charge blanche renforçante, le taux de TESPT et celui de l'ester de l'acide maléamique sont dans les deux cas inférieurs à 10%.

Les tableaux 1 et 2 donnent la formulation des différentes compositions (tableau 1 - taux des différents produits exprimés en pce), leurs propriétés avant et après cuisson (25 min à 150°C). La figure 1 annexée reproduit quant à elle les courbes de module (en MPa) en fonction de l'allongement (en %), ces courbes étant notées C1 et C2 et correspondant respectivement aux compositions N°1 et N°2. Le système de vulcanisation est constitué par soufre et sulfénamide.

L'examen de ces différents résultats du tableau 2 conduit aux observations suivantes:
- les temps de grillage (T5) sont suffisamment longs dans tous les cas (plus de 20 min), offrant une marge de sécurité importante vis-à-vis du problème de grillage;
- les valeurs de plasticité Mooney restent basses (nettement inférieures à 50 UM) quelle que soit la composition considérée, ce qui est l'indicateur d'une très bonne aptitude des compositions à la mise en oeuvre à l'état cru;
- après cuisson, la composition conforme à l'invention (N°2) présente les valeurs les plus élevées de module, notamment sous forte déformation (M100 et M300), ainsi que le rapport (M300/M100) le plus élevé, indicateurs connus pour l'homme du métier de la qualité du renforcement apporté par la charge blanche;
- il faut en déduire que l'augmentation de viscosité Mooney (+ 7 points) observée sur la composition de l'invention est due à la formation, lors du malaxage thermo-mécanique, de liaisons supplémentaires entre la charge blanche et l'élastomère diénique, en d'autres termes d'un meilleur couplage (charge blanche/élastomère).

La figure 1 annexée confirme bien les observations précédentes : la composition de l'invention (courbe C2) révèle un niveau de renforcement (module) supérieur quel que soit le taux d'allongement, en particulier à grande déformation (allongements de 100% et plus) ; pour un tel domaine d'allongements, ce comportement illustre de manière claire une meilleure qualité de la liaison ou couplage entre la charge blanche renforçante et l'élastomère diénique.

### B) Essai 2

Cet essai confirme les résultats de l'essai précédent dans le cas de compositions comportant cette fois, à titre de charge blanche renforçante, un coupage (50/50 en volume) de silice et d'alumine (alumine telle que décrite dans la demande EP-A-0 810 258 précitée).

On compare pour cela deux compositions à base de caoutchouc naturel, destinées également à des bandes de roulement pour pneumatiques Poids-lourd ; ces compositions sont identiques aux différences près qui suivent:
- composition N°3 : agent de couplage TESPT (4 pce);
- composition N°4 : agent de couplage à fonction ester maléamique (4,5 pce);

La composition N°3 est donc la composition témoin, la composition N°4 est la composition conforme à l'invention. Comme précédemment, les agents de couplage sont utilisés à un taux isomolaire en fonctions triéthoxysilane (même nombre de moles de fonctions réactives vis-à-vis de la charge blanche totale). Par rapport au poids de charge blanche (65 pce), le taux d'agent de couplage est dans les deux cas inférieur à 8%.

Les tableaux 3 et 4 donnent la formulation des différentes compositions, leurs propriétés avant et après cuisson (20 min à 150°C). La figure 2 annexée reproduit les courbes de module (en MPa) en fonction de l'allongement (en %), ces courbes étant notées C3 et C4 et correspondant respectivement aux compositions N°3 et N°4.

L'examen des résultats du tableau 4 confirme les avantages de la composition selon l'invention, avec notamment:
- une sécurité au grillage suffisante dans les deux cas (T5 au moins égal à 10 min);
- une plasticité Mooney suffisamment basse dans les deux cas (inférieure à 50 UM), indicatrice d'une très bonne aptitude à la mise en oeuvre à l'état cru;
- des valeurs de module sous forte déformation (M300) et de rapport (M300/M100) supérieures pour la composition de l'invention, indicateurs d'un meilleur renforcement;
- corrélée à une augmentation de plasticité (+8 points) pour la composition de l'invention, attribuable ici à la formation de liaisons supplémentaires entre la charge et l'élastomère lors des opérations de malaxage;
- des propriétés mécaniques à la rupture équivalentes.

La figure 2 confirme bien les observations précédentes : si les courbes C3 et C4 sont certes sensiblement superposées pour des allongements de 100 à 300%, on note toutefois que la courbe C4 présente, comparée à la courbe C3 témoin, un niveau de renforcement (module) supérieur à plus grande déformation (allongement de 300% et plus), indicateur d'une liaison améliorée entre charge et élastomère.

### C) Essai 3

Cet essai illustre un autre mode de réalisation préférentiel de l'invention, dans lequel on associe à l'agent de couplage à fonction ester maléamique précédent (composant C), à titre d'agent de recouvrement de la charge blanche renforçante, un α,ω-dihydroxy-polyorganosiloxane, conformément notamment à l'enseignement de la demande de brevet EP-A-0 784 072.

Le polyorganosiloxane fonctionnalisé est incorporé à la composition selon l'invention en même temps que l'agent de couplage organosilane (étape non-productive), pour améliorer la mise en oeuvre à l'état cru (abaissement de la viscosité) et la dispersion de la charge blanche dans la matrice élastomérique.

On compare pour cet essai deux compositions identiques aux différences près qui suivent:
- composition N°5 (témoin) : agent de couplage TESPT (4 pce);
- composition N°6 (invention) : agent de couplage à fonction ester maléamique (3 pce) plus polyorganosiloxane (1,2 pce).

Par rapport au poids de charge blanche renforçante, la composition selon l'invention contient avantageusement moins de 8% (précisément, 6%) d'agent de couplage.

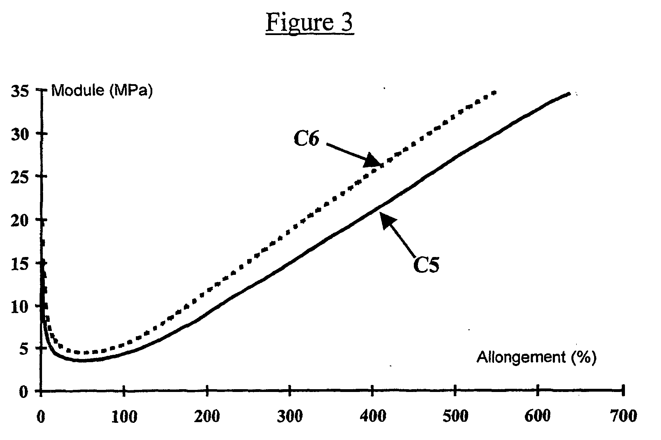

Les tableaux 5 et 6 donnent la formulation des différentes compositions, leurs propriétés avant et après cuisson (150°C, 30 min). La figure 3 reproduit les courbes de module (en MPa) en fonction de l'allongement (en %), ces courbes étant notées C5 et C6 et correspondant respectivement aux compositions N°5 et N°6.

L'étude des différents résultats démontre que la composition N°6 selon l'invention, comparée à la composition témoin, présente des caractéristiques globalement améliorées:
- plasticité Mooney basse dans les deux cas;
- sécurité au grillage équivalente, voire légèrement supérieure;
- modules M100, M300 et rapport (M300/M100) nettement supérieurs, synonymes d'un meilleur renforcement et donc d'un couplage amélioré entre l'élastomère et la charge blanche ; ceci est nettement confirmé par les courbes de la figure 3 (courbe C6 nettement au-dessus de la courbe C5, quel que soit l'allongement).

En conclusion, l'agent de couplage sélectionné pour les compositions conformes à l'invention permet de donner à ces dernières des propriétés mécaniques particulièrement élevées, en même temps qu'il leur confère de très bonnes propriétés de mise en oeuvre et des propriétés d'hystérèse améliorées.

Non seulement cet agent de couplage, grâce à sa fonction (X) spécifique, révèle une performance nettement supérieure à celle d'agents de couplage connus du type à double liaison éthylénique activée. Mais il démontre encore, de manière inattendue, une efficacité sensiblement supérieure à celle de l'alkoxysilane polysulfuré TESPT, pourtant considéré aujourd'hui comme étant le meilleur agent de couplage (charge blanche/élastomère) dans les compositions de caoutchouc renforcées d'une charge blanche telle que la silice.

L'invention trouve des applications particulièrement avantageuses dans les compositions de caoutchouc utilisables pour la fabrication de bandes de roulement de pneumatiques présentant à la fois une faible résistance au roulement et une résistance élevée à l'usure, en particulier lorsque ces bandes de roulement sont à base de caoutchouc naturel ou de polyisoprène de synthèse et sont destinées à des pneumatiques pour véhicules industriels du type Poids-lourd.

**Tableau 1**

| Composition N° : | 1 | 2 |
|---|---|---|
| NR (1) | 100 | 100 |
| silice (2) | 50 | 50 |
| silane (3) | 4 | - |
| silane (4) | - | 4.5 |
| ZnO | 3 | 3 |
| acide stéarique | 2.5 | 2.5 |
| antioxydant (5) | 1.9 | 1.9 |
| soufre CBS(6) | 1.5 1.8 | 1.5 1.8 |

| | | |
|---|---|---|
| (1) caoutchouc naturel; | | |
| (2) silice type "HD" - Zeosil 1165MP de la société Rhodia sous forme de microperles (BET et CTAB : environ 150-160 m²/g); | | |
| (3) agent de couplage TESPT - Si69 de la société Degussa; | | |
| (4) agent de couplage à fonction ester maléamique (formule III-2); | | |
| (5) N-1,3-diméthylbutyl-N-phényl-para-phénylènediamine; | | |
| (6) N-cyclohexyl-2-benzothiazyl-sulfénamide. | | |

**Tableau 2**

| Composition N°: | 1 | 2 |
|---|---|---|
| *Propriétés avant cuisson:* | | |
| | | |
| Mooney (UM) | 33 | 40 |
| T5(min) | 21 | 22 |

| *Propriétés après cuisson:* | | |
|---|---|---|
| | | |
| M10 (MPa) | 5.10 | 7.30 |
| M100 (MPa) | 1.74 | 2.23 |
| M300 (MPa) | 1.76 | 2.60 |
| M300 / M100 | 1.01 | 1.17 |
| | | |
| contrainte rupture (MPa) | 31 | 31 |
| allongement rupture (%) | 620 | 540 |

**Tableau 3**

| Composition N° : | 3 | 4 |
|---|---|---|
| NR(1) | 100 | 100 |
| silice (2) | 25 | 25 |
| alumine (7) | 40 | 40 |
| silane (3) | 4 | - |
| silane (4) | - | 4.5 |
| ZnO | 3 | 3 |
| acide stéarique | 2.5 | 2.5 |
| antioxydant (5) | 1.9 | 1.9 |
| soufre | 1.5 | 1.5 |
| CBS(6) | 1.8 | 1.8 |

| | | |
|---|---|---|
| (1)à(6) idem tableau 1; (7) alumine CR125 de la société Baïkowski (sous forme de poudre - BET : environ 105 m²/g). | | |

**Tableau 4**

| Composition N° : | 3 | 4 |
|---|---|---|
| *Propriétés avant cuisson:* | | |
| | | |
| Mooney (UM) | 38 | 46 |
| T5 (min) | 12 | 10 |
| | | |

| *Propriétés après cuisson:* | | |
|---|---|---|
| | | |
| M10 (MPa) | 5.2 | 5.3 |
| M100 (MPa) | 3.3 | 3.0 |
| M300 (MPa) | 6.7 | 7.1 |
| M300 / M100 | 2.0 | 2.4 |
| | | |
| contrainte rupture (MPa) | 30 | 29 |
| allongement rupture (%) | 625 | 573 |

**Tableau 5**

| Composition N° : | 5 | 6 |
|---|---|---|
| NR(1) | 100 | 100 |
| silice (2) | 50 | 50 |
| silane (3) | 4 | - |
| silane (4) | - | 3 |
| PDMS(8) | - | 1.2 |
| ZnO | 3 | 3 |
| acide stéarique | 2.5 | 2.5 |
| antioxydant (5) | 1.9 | 1.9 |
| soufre | 1.5 | 1.5 |
| CBS (6) | 1.8 | 1.8 |

| | | |
|---|---|---|
| (1) à (6) idem tableau 1; (8) agent de recouvrement : α,ω-dihydroxy-polydiméthylsiloxane (huile H48V50 de la société Rhodia). | | |

**Tableau 6**

| Composition N° : | 5 | 6 |
|---|---|---|
| *Propriétés avant cuisson:* | | |
| | | |
| Mooney (UM) | 36 | 32 |
| T5 (min) | 18 | 20 |
| | | |

| *Propriétés après cuisson:* | | |
|---|---|---|
| | | |
| | | |
| M10 (MPa) | 5.2 | 7.2 |
| M100 (MPa) | 3.6 | 4.4 |
| M300 (MPa) | 7.6 | 10.5 |
| M300 / M100 | 2.1 | 2.4 |
| | | |
| contrainte rupture (MPa) | 30 | 30 |
| allongement rupture (%) | 633 | 555 |

## Revendications

1. Composition de caoutchouc vulcanisable au soufre, utilisable pour la fabrication de pneumatiques, à base d'au moins un élastomère diénique (composant A), une charge blanche à titre de charge renforçante (composant B), un agent de couplage (charge blanche/élastomère) porteur d'au moins deux fonctions notées "Y" et "X" (composant C), greffable d'une part sur la charge blanche au moyen de la fonction Y et d'autre part sur l'élastomère au moyen de la fonction X, **caractérisée en ce que** la fonction X est une fonction ester d'un acide α-β insaturé porteur en position γ d'un groupe carbonyle, de formule générale (X): 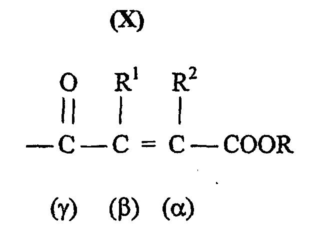 dans laquelle R, R¹ et R², identiques ou différents, représentent chacun un radical hydrocarboné monovalent, ou, dans le cas de R¹ et R², un atome d'hydrogène également.

2. Composition de caoutchouc selon la revendication 1, dans laquelle le composant A est choisi dans le groupe constitué par les polybutadiènes, le caoutchouc naturel, les polyisoprènes de synthèse, les copolymères de butadiène, les copolymères d'isoprène et les mélanges de ces élastomères.

3. Composition de caoutchouc selon la revendication 2, dans laquelle les copolymères de butadiène ou d'isoprène sont choisis parmi les copolymères de butadiène-styrène, les copolymères de butadiène-isoprène, les copolymères d'isoprène-styrène, les copolymères de butadiène-styrène-isoprène et les mélanges de ces copolymères.

4. Composition de caoutchouc selon l'une quelconque des revendications 1 à 3, dans laquelle la fonction X est une fonction ester-maléamique de formule (I) ou ester-fumaramique de formule (II) ci-après: 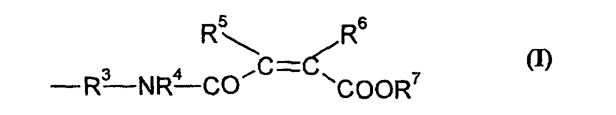 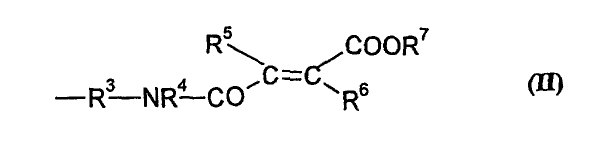 dans lesquelles:
- R³ est un radical hydrocarboné divalent alkylène, linéaire ou ramifié, ayant de préférence de 1 à 10 atomes de carbone;
- les symboles R⁴, R⁵ et R⁶, identiques ou différents entre eux, représentent chacun un atome d'hydrogène ou un groupe hydrocarboné monovalent choisi de préférence parmi les alkyles, linéaires ou ramifiés, ayant de 1 à 6 atomes de carbone ou un radical phényle;
- R⁷ est un groupe hydrocarboné monovalent choisi de préférence parmi les alkyles, linéaires ou ramifiés, ayant de 1 à 6 atomes de carbone ou un radical phényle.

5. Composition selon la revendication 4, dans laquelle le composant C est un alkoxysilane répondant à la formule générale (III) qui suit: 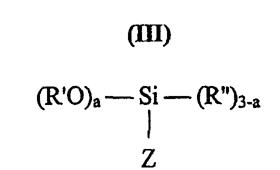 dans laquelle:
- les radicaux R', identiques ou différents entre eux, représentent chacun un groupe hydrocarboné monovalent choisi parmi les alkyles, linéaires ou ramifiés, ayant de 1 à 4 atomes de carbone, les alkoxyalkyles, linéaires ou ramifiés, ayant de 2 à 6 atomes de carbone, les cycloalkyles ayant de 5 à 8 atomes de carbone, ou un radical phényle ;
- les symboles R", identiques ou différents entre eux, représentent chacun un groupe hydrocarboné monovalent choisi parmi les alkyles, linéaires ou ramifiés, ayant de 1 à 6 atomes de carbone, les cycloalkyles ayant de 5 à 8 atomes de carbone, ou un radical phényle ;
- Z = -L-X ; L, relié à l'atome de Silicium, étant un groupe de liaison divalent, linéaire ou ramifié, ayant de préférence de 1 à 16 atomes de carbone, comportant éventuellement un ou plusieurs hétéroatomes choisis de préférence parmi S, O ou N;
- a est égal à 1, 2 ou 3.

6. Composition de caoutchouc selon les revendications 4 ou 5, **caractérisée en ce que**, dans les formules (I), (II) et (III) précédentes, les caractéristiques suivantes sont vérifiées:
- les radicaux R' de la formule (III) sont choisis parmi les radicaux : méthyle, éthyle, n-propyle, isopropyle, n-butyle, CH₃OCH₂-, CH₃OCH₂CH₂-, CH₃OCH(CH₃)CH₂- ;
- les radicaux R" de la formule (III) sont choisis parmi les radicaux méthyle, éthyle, n-propyle, isopropyle, n-butyle, n-pentyle, cyclohexyle ou phényle;
- le radical R³ des formules (I) ou (II) représente un reste alkylène répondant aux formules suivantes: -(CH₂)₂-, -(CH₂)₃-, -(CH₂)₄-, -CH₂-CH(CH₃)- , -(CH₂)₂-CH(CH₃)-(CH₂)- , -(CH₂)₃-O-(CH₂)₃- , -(CH₂)₃-O-CH₂-CH(CH₃)-CH₂- ;
- les radicaux R⁴, R⁵ et R⁶ des formules (I) ou (II) sont choisis parmi l'hydrogène ou les radicaux méthyle, éthyle, n-propyle, isopropyle ou n-butyle ;
- le radical R⁷ des formules (I) ou (II) est choisi parmi les radicaux méthyle, éthyle, n-propyle ou isopropyle.

7. Composition selon les revendications 5 ou 6, **caractérisé en ce que** l'alkoxysilane de formule générale (III) a pour formule particulière (III-1): 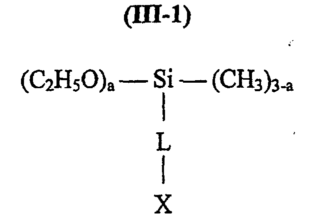 dans laquelle:
- L = -R³-NR⁴- (selon formules I et II supra);
- X est la fonction ester-maléamique de formule (I) ou ester-fumaramique de formule (II) supra.

8. Composition selon la revendication 7, **caractérisée en ce que** l'alkoxysilane est l'ester méthylique de l'acide N[γ-propyl(méthyl-diéthoxy)silane] maléamique de formule (III-2):

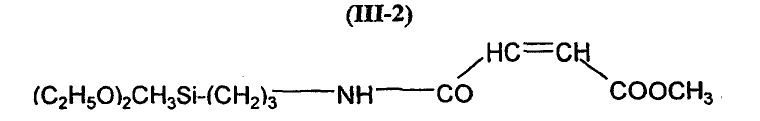

9. Composition selon la revendication 7, **caractérisée en ce que** l'alkoxysilane est l'ester méthylique de l'acide N[γ-propyl(méthyl-diéthoxy)silane] fumaramique de formule (III-3):

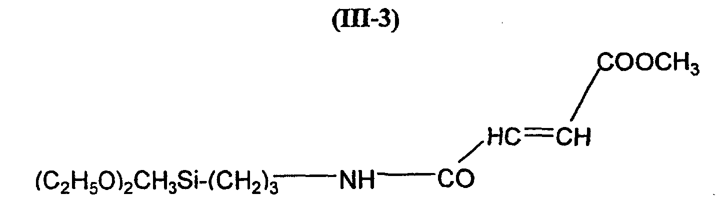

10. Composition selon l'une quelconque des revendications 1 à 9, contenant entre 10 et 200 pce de composant B.

11. Composition selon l'une quelconque des revendications 1 à 10, dans laquelle la quantité de composant C représente entre 0,5% et 20% par rapport au poids de composant B.

12. Composition selon la revendication 11, dans laquelle la quantité de composant C représente moins de 10% par rapport au poids de composant B.

13. Composition selon l'une quelconque des revendications 1 à 12, dans laquelle le composant B est majoritairement de la silice.

14. Composition selon l'une quelconque des revendications 1 à 12, dans laquelle le composant B est majoritairement de l'alumine.

15. Composition selon l'une quelconque des revendications 1 à 14, dans laquelle le composant B constitue la totalité de la charge renforçante.

16. Composition selon l'une quelconque des revendications 1 à 14, dans laquelle le composant B est utilisé en mélange avec du noir de carbone.

17. Composition selon l'une quelconque des revendications 2 à 16, dans laquelle le composant A est constitué majoritairement de caoutchouc naturel, de polyisoprène de synthèse, d'un copolymère d'isoprène ou d'un mélange de ces élastomères.

18. Composition selon la revendication 17, dans laquelle le composant A est constitué exclusivement de caoutchouc naturel ou de polyisoprène de synthèse.

19. Composition selon l'une quelconque des revendications 1 à 18, **caractérisée en ce qu'**elle se trouve à l'état vulcanisé.

20. Procédé pour préparer une composition de caoutchouc utilisable pour la fabrication de pneumatiques, **caractérisé en ce qu'**on incorpore à:
(i) - au moins un élastomère diénique (composant A), au moins
(ii) - une charge blanche à titre de charge renforçante (composant B), et
(iii) - un agent de couplage (charge blanche/élastomère diénique) porteur d'au moins deux fonctions notées "Y" et "X" (composant C), greffable d'une part sur la charge blanche au moyen de la fonction Y et d'autre part sur l'élastomère au moyen de la fonction X, la fonction X étant une fonction ester d'un acide α-β insaturé porteur en position γ d'un groupe carbonyle, de formule générale (X): 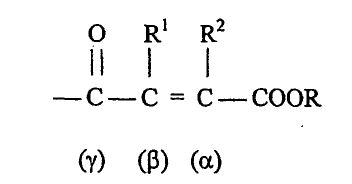 dans laquelle R, R¹ et R², identiques ou différents, représentent chacun un radical hydrocarboné monovalent, ou, dans le cas de R¹ et R², un atome d'hydrogène également,
et **en ce qu'**on malaxe thermomécaniquement le tout, en une ou plusieurs étapes, jusqu'à atteindre une température maximale comprise entre 110°C et 190°C.

21. Procédé selon la revendication 20, **caractérisé en ce que** la température maximale de malaxage est comprise entre 130°C et 180°C.

22. Utilisation d'une composition de caoutchouc conforme à l'une quelconque des revendications 1 à 18, pour la fabrication de pneumatiques ou de produits semi-finis destinés aux pneumatiques, ces produits semi-finis étant choisis en particulier dans le groupe constitué par les bandes de roulement, les sous-couches de ces bandes de roulement, les nappes sommet, les flancs, les nappes carcasse, les talons, les protecteurs, les chambres à air et les gommes intérieures étanches pour pneu sans chambre.

23. Pneumatique à l'état cru comportant une composition de caoutchouc conforme à l'une quelconque des revendications 1 à 18.

24. Pneumatique à l'état cuit comportant une composition de caoutchouc conforme à la revendication 19.

25. Produit semi-fini pour pneumatique, comportant une composition de caoutchouc conforme à l'une quelconque des revendications 1 à 18, ce produit étant choisi en particulier dans le groupe constitué par les bandes de roulement, les sous-couches de ces bandes de roulement, les nappes sommet, les flancs, les nappes carcasse, les talons, les protecteurs, les chambres à air et les gommes intérieures étanches pour pneu sans chambre.

26. Produit semi-fini selon la revendication 25, consistant en une bande de roulement de pneumatique.

27. Bande de roulement de pneumatique selon la revendication 26, **caractérisée en ce qu'**elle est à base d'une composition de caoutchouc selon les revendications 17 ou 18.

28. Utilisation, comme agent de couplage (charge blanche/élastomère diénique), dans une composition de caoutchouc à base d'élastomère diénique renforcée d'une charge blanche, d'un composé porteur d'au moins deux fonctions notées "Y" et "X", greffable d'une part sur la charge blanche au moyen de la fonction Y et d'autre part sur l'élastomère au moyen de la fonction X, **caractérisée en ce que** ladite fonction X est une fonction ester d'un acide α-β insaturé porteur en position y d'un groupe carbonyle, de formule générale (X): 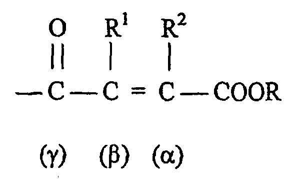 dans laquelle R, R¹ et R², identiques ou différents, représentent chacun un radical hydrocarboné monovalent, ou, dans le cas de R¹ et R², un atome d'hydrogène également.

29. Utilisation selon la revendication 28, **caractérisée en ce que** la fonction X est une fonction ester-maléamique ou ester-fumaramique répondant respectivement aux formules (I) et (II) ci-après: 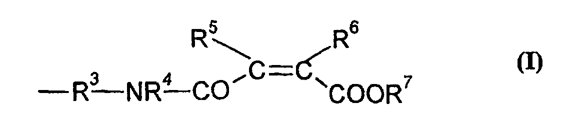 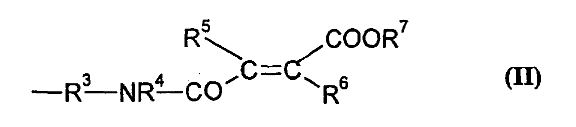 dans lesquelles:
- R³ est un radical hydrocarboné divalent alkylène, linéaire ou ramifié, ayant de préférence de 1 à 10 atomes de carbone;
- les symboles R⁴, R⁵ et R⁶, identiques ou différents entre eux, représentent chacun un atome d'hydrogène ou un groupe hydrocarboné monovalent choisi de préférence parmi les alkyles, linéaires ou ramifiés, ayant de 1 à 6 atomes de carbone ou un radical phényle;
- R⁷ est un groupe hydrocarboné monovalent choisi de préférence parmi les alkyles, linéaires ou ramifiés, ayant de 1 à 6 atomes de carbone ou un radical phényle.

30. Utilisation selon les revendications 28 ou 29, ledit élastomère diénique étant choisi dans le groupe constitué par les polybutadiènes, le caoutchouc naturel, les polyisoprènes de synthèse, les copolymères de butadiène, les copolymères d'isoprène et les mélanges de ces élastomères.

31. Procédé pour coupler une charge blanche et un élastomère diénique, dans une composition de caoutchouc utilisable pour la fabrication de pneumatiques, **caractérisé en ce qu'**on incorpore à:
(i) - au moins un élastomère diénique (composant A), au moins:
(ii) - une charge blanche à titre de charge renforçante (composant B), et
(iii) - un agent de couplage (charge blanche/élastomère diénique) porteur d'au moins deux fonctions notées "Y" et "X" (composant C), greffable d'une part sur la charge blanche au moyen de la fonction Y et d'autre part sur l'élastomère au moyen de la fonction X, ladite fonction X consistant en une fonction ester d'un acide α-β insaturé porteur en position γ d'un groupe carbonyle et ayant pour formule générale (X): 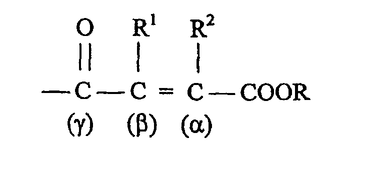 dans laquelle R, R¹ et R², identiques ou différents, représentent chacun un radical hydrocarboné monovalent, ou, dans le cas de R¹ et R², un atome d'hydrogène également,
et **en ce qu'**on malaxe thermomécaniquement le tout, en une ou plusieurs étapes, jusqu'à atteindre une température maximale comprise entre 110°C et 190°C.

32. Procédé selon la revendication 31, **caractérisé en ce que** la température maximale de malaxage est comprise entre 130°C et 180°C.

33. Procédé selon les revendications 31 ou 32, **caractérisé en ce que** la fonction X est une fonction ester-maléamique ou ester-fumaramique répondant respectivement aux formules (I) et (II) ci-après: 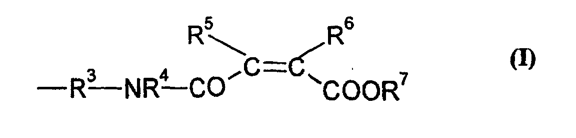 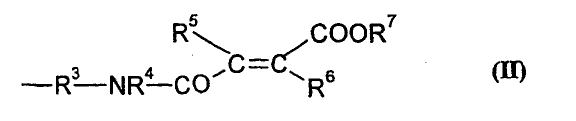 dans lesquelles:
- R³ est un radical hydrocarboné divalent alkylène, linéaire ou ramifié, ayant de préférence de 1 à 10 atomes de carbone;
- les symboles R⁴, R⁵ et R⁶, identiques ou différents entre eux, représentent chacun un atome d'hydrogène ou un groupe hydrocarboné monovalent choisi de préférence parmi les alkyles, linéaires ou ramifiés, ayant de 1 à 6 atomes de carbone ou un radical phényle;
- R⁷ est un groupe hydrocarboné monovalent choisi de préférence parmi les alkyles, linéaires ou ramifiés, ayant de 1 à 6 atomes de carbone ou un radical phényle.

34. Procédé selon l'une quelconque des revendications 31 à 33, ledit élastomère diénique étant choisi dans le groupe constitué par les polybutadiènes, le caoutchouc naturel, les polyisoprènes de synthèse, les copolymères de butadiène, les copolymères d'isoprène et les mélanges de ces élastomères.

## Patentansprüche

1. Mit Schwefel vulkanisierbare Kautschukmischung, die zur Herstellung von Luftreifen verwendbar ist, auf der Basis zumindest eines Dienelastomers (Komponente A), eines hellen Füllstoffs als verstärkenden Füllstoff (Komponente B) und eines Kupplungsmittels (heller Füllstoff/Elastomer) (Komponente C), das mindestens zwei mit "Y" und "X" bezeichnete Funktionen aufweist und einerseits über die Funktion "Y" auf den hellen Füllstoff und andererseits über die Funktion "X" auf das Elastomer gepfropft werden kann, **dadurch gekennzeichnet, dass** die Funktion "X" eine Esterfunktion einer α,β-ungesättigten Säure der folgenden allgemeinen Formel (X) ist, die in γ-Stellung eine Carbonylgruppe aufweist: 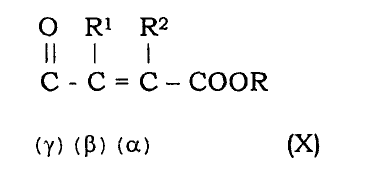 worin die Gruppen R, R¹ und R², die identisch oder voneinander verschieden sind, jeweils eine einwertige Kohlenwasserstoffgruppe bedeuten, wobei die Gruppen R¹ und R² auch Wasserstoff bedeuten können.

2. Kautschukmischung nach Anspruch 1, wobei die Komponente A unter den Polybutadienen, Naturkautschuk, synthetischen Polyisoprenen, Butadien-Copolymeren, Isopren-Copolymeren und den Gemischen dieser Elastomere ausgewählt ist.

3. Kautschukmischung nach Anspruch 2, wobei die Copolymere von Butadien oder Isopren unter den Butadien-Styrol-Copolymeren, Butadien-Isopren-Copolymeren, Isopren-Styrol-Copolymeren und Butadien-Styrol-Isopren-Copolymeren und den Gemischen dieser Copolymere ausgewählt sind.

4. Kautschukmischung nach einem der Ansprüche 1 bis 3, wobei die Funktion "X" eine Maleamesterfunktion der Formel (I) oder eine Fumaramesterfunktion der Formel (II) bedeutet: 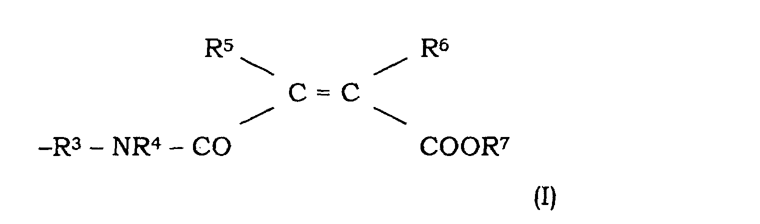 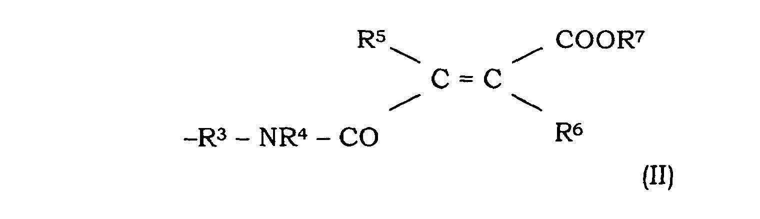 worin bedeuten:
- die Gruppe R³ eine geradkettige oder verzweigte zweiwertige Alkylengruppe, die vorzugsweise 1 bis 10 Kohlenstoffatome aufweist;
- die Gruppen R⁴, R⁵ und R⁶, die gleich oder verschieden sind, jeweils ein Wasserstoffatom oder eine einwertige Kohlenwasserstoffgruppe, die vorzugsweise unter den geradkettigen oder verzweigten Alkylgruppen mit 1 bis 6 Kohlenstoffatomen oder Phenyl ausgewählt ist;
- die Gruppe R⁷ eine einwertige Kohlenwasserstoffgruppe, die vorzugsweise unter den geradkettigen oder verzweigten Alkylgruppen mit 1 bis 6 Kohlenstoffatomen oder Phenyl ausgewählt ist.

5. Zusammensetzung nach Anspruch 4, wobei die Komponente C eine Alkoxysilan der folgenden allgemeinen Formel (III) ist: 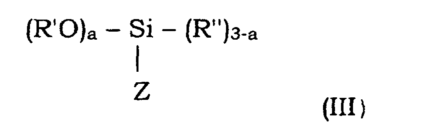 worin bedeuten:
- die Gruppen R', die gleich oder voneinander verschieden sind, jeweils eine einwertige Kohlenwasserstoffgruppe, die unter den geradkettigen oder verzweigten Alkylgruppen mit 1 bis 4 Kohlenstoffatomen, den geradkettigen oder verzweigten Alkoxyalkylgruppen mit 2 bis 6 Kohlenstoffatomen, den Cycloalkylgruppen mit 5 bis 8 Kohlenstoffatomen oder Phenyl ausgewählt ist;
- die Gruppe R", die identisch oder voneinander verschieden sind, jeweils eine einwertige Kohlenwasserstoffgruppe, die unter den geradkettigen oder verzweigten Alkylgruppen mit 1 bis 6 Kohlenstoffatomen, Cycloalkylgruppen mit 5 bis 8 Kohlenstoffatomen oder Phenyl ausgewählt ist;
- Z = -L-X, wobei die an das Siliciumatom gebundene Gruppe L eine zweiwertige, geradkettige oder verzweigte Verbindungsgruppe bedeutet, die vorzugsweise 1 bis 16 Kohlenstoffatome aufweist und ggf. ein oder mehrere Heteroatome enthält, die vorzugsweise unter S, O oder N ausgewählt sind; und
- a 1, 2 oder 3.

6. Kautschukmischung nach den Ansprüchen 4 oder 5, **dadurch gekennzeichnet, dass** in den Formeln (I), (II) und (III) die folgenden Eigenschaften erfüllt sind:
- die Gruppen R' der Formel (III) sind unter den folgenden Gruppen ausgewählt: Methyl, Ethyl, n-Propyl, Isopropyl, n-Butyl, CH₃OCH₂-, CH₃OCH₂CH₂-, CH₃OCH(CH₃)CH₂-;
- die Gruppen R" der Formel (III) sind unter den Gruppen Methyl, Ethyl, n-Propyl, Isopropyl, n-Butyl, n-Pentyl, Cyclohexyl oder Phenyl ausgewählt;
- die Gruppen R³ der Formel (I) oder (II) bedeuten eine Alkylengruppe der folgenden Formeln: -(CH₂)₂-, -(CH₂)₃-, -(CH₂)₄-, -CH₂-CH(CH₃)-, -(CH₂)₂-CH(CH₃)-(CH₂)-, -(CH₂)₃-O-(CH₂)₃-, -(CH₂)₃-O-CH₂-CH(CH₃)-CH₂-;
- die Gruppen R⁴, R⁵ und R⁶ der Formel (I) oder (II) sind unter Wasserstoff oder Methyl, Ethyl, n-Propyl, Isopropyl oder n-Butyl ausgewählt;
- die Gruppe R⁷ der Formel (I) oder (II) ist unter den Gruppen Methyl, Ethyl, n-Propyl oder Isopropyl ausgewählt.

7. Zusammensetzung nach den Ansprüchen 5 oder 6, **dadurch gekennzeichnet, dass** das Alkoxysilan der allgemeinen Formel (III) die spezielle Formel (III-1) aufweist: 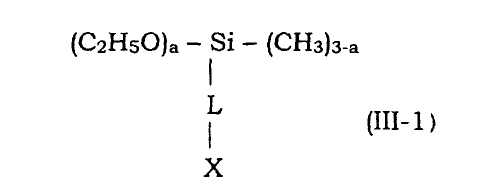 worin bedeuten:
- L = -R³-NR⁴- (gemäß den Formeln (I) und (II) oben);
- X ist die Maleamesterfunktion der Formel (I) oder die Fumaramesterfunktion der Formel (II) oben.

8. Zusammensetzung nach Anspruch 7, **dadurch gekennzeichnet, dass** es sich bei dem Alkoxysilan um den Methylester der N-[γ-Propyl(methyl-diethoxy)silan]maleamsäure der Formel (III-2) handelt:

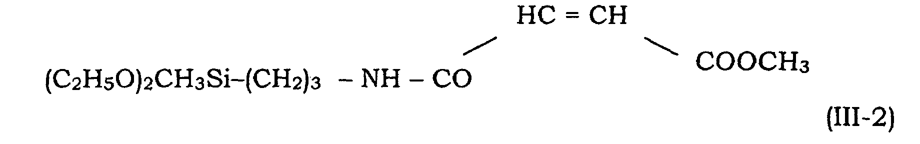

9. Zusammensetzung nach Anspruch 7, **dadurch gekennzeichnet, dass** es sich bei dem Alkoxysilan um den Methylester der N-[γ-Propyl(methyl-diethoxy)silan]fumaramsäure der Formel (III-3) handelt:

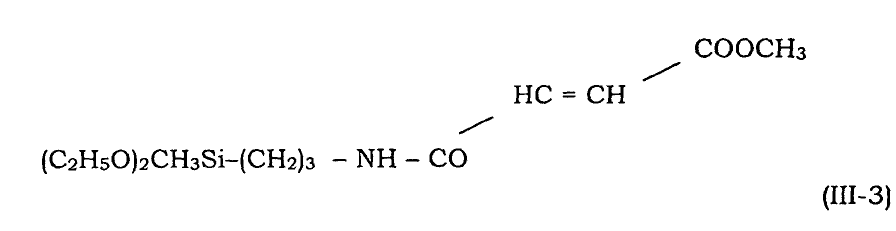

10. Zusammensetzung nach einem der Ansprüche 1 bis 9, die die Komponente B in einer Menge von 10 bis 200 pce enthält.

11. Zusammensetzung nach einem der Ansprüche 1 bis 10, wobei der Mengenanteil der Komponente C im Bereich von 0,5 bis 20 %, bezogen auf das Gewicht der Komponente B, liegt.

12. Zusammensetzung nach Anspruch 11, wobei der Mengenanteil der Komponente C weniger als 10 %, bezogen auf das Gewicht der Komponente B, ausmacht.

13. Zusammensetzung nach einem der Ansprüche 1 bis 12, wobei die Komponente B hauptsächlich aus Kieselsäure besteht.

14. Zusammensetzung nach einem der Ansprüche 1 bis 12, wobei die Komponente B hauptsächlich aus Aluminiumoxid besteht.

15. Zusammensetzung nach einem der Ansprüche 1 bis 14, wobei die Komponente B den gesamten verstärkenden Füllstoff ausmacht.

16. Zusammensetzung nach einem der Ansprüche 1 bis 14, wobei die Komponente B im Gemisch mit Ruß verwendet wird.

17. Zusammensetzung nach einem der Ansprüche 2 bis 16, wobei die Komponente A hauptsächlich aus Naturkautschuk, synthetischem Polyisopren, einem Isopren-Copolymer oder einem Gemisch dieser Elastomere besteht.

18. Zusammensetzung nach Anspruch 17, wobei die Komponente A hauptsächlich aus Naturkautschuk oder synthetischem Polyisopren besteht.

19. Zusammensetzung nach einem der Ansprüche 1 bis 18, **dadurch gekennzeichnet, dass** sie im vulkanisierten Zustand vorliegt.

20. Verfahren zur Herstellung einer Dienkautschukmischung, die zur Herstellung von Luftreifen verwendbar ist, **dadurch gekennzeichnet, dass** in
(i) mindestens ein Dienelastomer (Komponente A) zumindest
(ii) ein heller Füllstoff als verstärkender Füllstoff (Komponente B) und
(iii) ein Kupplungsmittel (heller Füllstoff/Dienelastomer) eingearbeitet werden, das mindestens zwei als "Y" und "X" bezeichnete Funktionen aufweist (Komponente C) und einerseits über die Funktion Y auf den hellen Füllstoff und andererseits über die Funktion X auf das Elastomer gepfropft werden kann, wobei die Funktion X eine Esterfunktion einer α,β-ungesättigten Säure der folgenden allgemeinen Formel (X) ist, die in γ-Stellung eine Carbonylgruppe trägt: 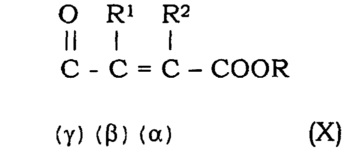 worin die Gruppen R, R¹ und R², die gleich oder verschieden sind, jeweils eine einwertige Kohlenwasserstoffgruppe bedeuten, wobei die Gruppen R¹ und R² auch ein Wasserstoffatom bedeuten können,
und dadurch, dass das Ganze in einem oder mehreren Schritten bis zum Erreichen einer maximalen Temperatur von 110° bis 190°C thermomechanisch geknetet wird.

21. Verfahren nach Anspruch 20, wobei die Maximaltemperatur beim Kneten im Bereich von 130 °C bis 180 °C liegt.

22. Verwendung einer Kautschukmischung nach einem der Ansprüche 1 bis 18 zur Herstellung von Luftreifen oder Halbfertigprodukten für Luftreifen, wobei die Halbfertigprodukte insbesondere unter den Laufstreifen, Unterplatten, die unter den Laufstreifen angebracht werden sollen, Scheitellagen, Seitenprofilen, Karkassenlagen, Reifenwülsten, Protektoren, Luftkammern und dichten Innengummis für schlauchlose Reifen ausgewählt sind.

23. Luftreifen im unvulkanisierten Zustand, der eine Kautschukmischung nach einem der Ansprüche 1 bis 18 enthält.

24. Luftreifen im vulkanisierten Zustand, der eine Kautschukmischung nach Anspruch 19 enthält.

25. Halbfertigprodukt für Luftreifen, das eine Kautschukmischung nach einem der Ansprüche 1 bis 18 enthält, wobei dieses Produkt insbesondere unter den Laufstreifen, Unterplatten, die unter den Laufstreifen angebracht werden sollen, Scheitellagen, Seitenprofilen, Karkassenlagen, Reifenwülsten, Protektoren, Luftkammern und dichten Innengummis für schlauchlose Reifen ausgewählt ist.

26. Halbfertigprodukt nach Anspruch 25, das ein Laufstreifen für Luftreifen ist.

27. Laufstreifen für Luftreifen nach Anspruch 26, **dadurch gekennzeichnet, dass** er auf einer Kautschukmischung nach den Ansprüchen 17 oder 18 basiert.

28. Verwendung, als Kupplungsmittel (heller Füllstoff/Dienelastomer) in einer Kautschukmischung auf der Basis eines mit einem hellen Füllstoff verstärkten Dienelastomers, einer Verbindung, die mindestens 2 als "Y"und "X" bezeichnete Funktionen aufweist und einerseits über die Funktion Y auf den hellen Füllstoff und andererseits über die Funktion X auf das Elastomer gepfropft werden kann, **dadurch gekennzeichnet, dass** die Funktion X eine Esterfunktion einer α,β-ungesättigten Säure der allgemeinen Formel (X) ist, die in γ-Stellung eine Carbonylgruppe aufweist: 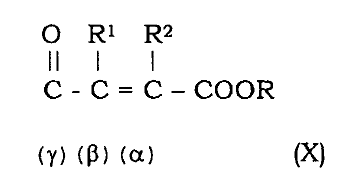 worin die Gruppen R, R¹ und R², die gleich oder verschieden sind, jeweils eine einwertige Kohlenwasserstoffgruppe bedeuten, wobei die Gruppen R¹ und R² auch ein Wasserstoffatom bedeuten können.

29. Verwendung nach Anspruch 28, **dadurch gekennzeichnet, dass** die Funktion X eine Maleamesterfunktion oder eine Fumaramesterfunktion der folgenden Formeln (I) bzw. (II) ist: 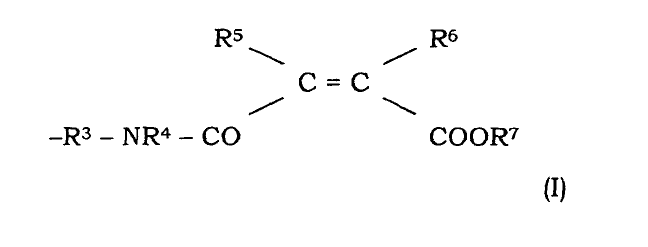 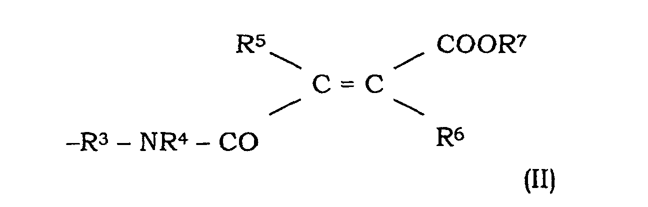 worin bedeuten:
- die Gruppe R³ eine geradkettige oder verzweigte zweiwertige Alkylengruppe, die vorzugsweise 1 bis 10 Kohlenstoffatome aufweist;
- die Gruppen R⁴, R⁵ und R⁶, die gleich oder verschieden sind, jeweils Wasserstoff oder eine einwertige Kohlenwasserstoffgruppe, die vorzugsweise unter den geradkettigen oder verzweigten Alkylgruppen mit 1 bis 6 Kohlenstoffatomen oder Phenyl ausgewählt ist;
- die Gruppe R⁷ eine einwertige Kohlenwasserstoffgruppe, die vorzugsweise unter den geradkettigen oder verzweigten Alkylgruppen mit 1 bis 6 Kohlenstoffatomen oder Phenyl ausgewählt ist.

30. Verwendung nach den Ansprüchen 28 oder 29, wobei das Dienelastomer unter den Polybutadienen, Naturkautschuk, synthetischen Polyisoprenen, Butadien-Copolymeren, Isopren-Copolymeren und den Gemischen dieser Elastomere ausgewählt ist.

31. Verfahren zur Verknüpfung eines hellen Füllstoffs und eines Dienelastomers in einer für die Herstellung von Luftreifen verwendbaren Kautschukmischung, **dadurch gekennzeichnet, dass** in
(i) - mindestens ein Dienelastomer (Komponente A) zumindest
(ii) - ein heller Füllstoff als verstärkender Füllstoff (Komponente B) und
(iii) - ein Kupplungsmittel (heller Füllstoff/Dienelastomer) ein gearbeitet werden, das mindestens zwei als "Y" und "X" bezeichnete Funktionen aufweist (Komponente C) und einerseits über die Funktion Y auf den hellen Füllstoff und andererseits über die Funktion X auf das Elastomer gepfropft werden kann, wobei die Funktion X eine Esterfunktion einer α,β-ungesättigten Säure der folgenden allgemeinen Formel (X) ist, die in γ-Stellung eine Carbonylgruppe trägt: 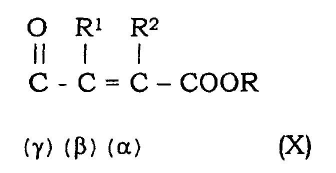
worin die Gruppen R, R¹ und R², die gleich oder verschieden sind, jeweils eine einwertige Kohlenwasserstoffgruppe bedeuten, wobei die Gruppen R¹ und R² auch ein Wasserstoffatom bedeuten können, und dadurch, dass das Ganze in einem oder mehreren Schritten bis zum Erreichen einer maximalen Temperatur von 110° bis 190°C thermomechanisch bearbeitet wird.

32. Verfahren nach Anspruch 31, **dadurch gekennzeichnet, dass** die Maximaltemperatur beim Kneten im Bereich von 130 °C° bis 180°C liegt.

33. Verfahren nach den Ansprüchen 31 oder 32, **dadurch gekennzeichnet, dass** die Funktion X eine Maleamesterfunktion oder eine Fumaramesterfunktion der Formel (I) bzw. (II) ist: 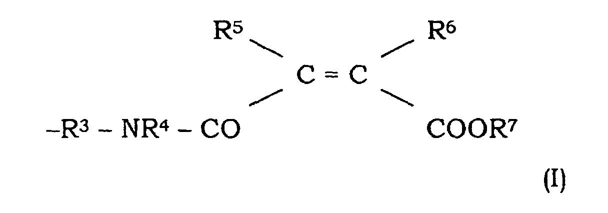 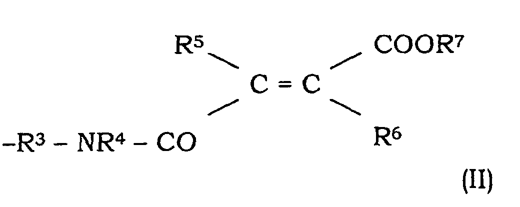 worin bedeuten:
- die Gruppe R³ eine geradkettige oder verzweigte, zweiwertige Alkylengruppe, die vorzugsweise 1 bis 10 Kohlenstoffatome aufweist;
- die Gruppen R⁴, R⁵ und R⁶, die gleich oder verschieden sind, jeweils Wasserstoff oder eine einwertige Kohlenwasserstoffgruppe, die vorzugsweise unter den geradkettigen oder verzweigten Alkylgruppen mit 1 bis 6 Kohlenstoffatomen oder Phenyl ausgewählt ist;
- die Gruppe R⁷ eine einwertige Kohlenwasserstoffgruppe, die vorzugsweise unter den geradkettigen oder verzweigten Alkylgruppen mit 1 bis 6 Kohlenstoffatomen oder Phenyl ausgewählt ist.

34. Verfahren nach einem der Ansprüche 31 bis 33, wobei das Dienelastomer unter den Polybutadienen, Naturkautschuk, synthetischen Polyisoprenen, Butadien-Copolymeren, Isopren-Copolymeren und den Gemischen dieser Elastomere ausgewählt ist.

## Claims

1. A sulphur-vulcanisable rubber composition usable for the manufacture of tyres, based on at least one diene elastomer (component A), one white filler as reinforcing filler (component B), one (white filler/elastomer) coupling agent bearing at least two functions denoted as "Y" and "X" (component C), which can be grafted on the one hand to the white filler by means of the Y function and on the other hand to the elastomer by means of the X function, **characterised in that** the X function is an ester function of an unsaturated α-β acid bearing a carbonyl group on its γ position and having the general formula (X) : 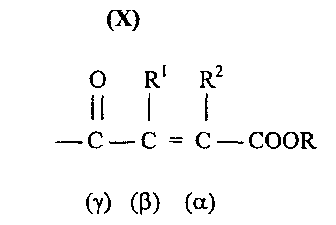 in which R, R¹ and R² may be the same or different, and each represents a monovalent hydrocarbon radical or, in the case of R¹ and R², also a hydrogen atom.

2. Rubber composition according to Claim 1, in which the component A is chosen from the group which consists of the polybutadienes, natural rubber, the synthetic polyisoprenes, the copolymers of butadiene, the copolymers of isoprene, and mixtures of these elastomers.

3. Rubber composition according to Claim 2, in which the copolymers of butadiene or isoprene are chosen from among the copolymers of butadiene-styrene, the copolymers of butadiene-isoprene, the copolymers of isoprene-styrene, the copolymers of butadiene-styrene-isoprene and mixtures of these copolymers.

4. Rubber composition according to any of Claims 1 to 3, in which X function is a maleamic-ester function with formula (I) or a fumaramic-ester function with formula (II) below : 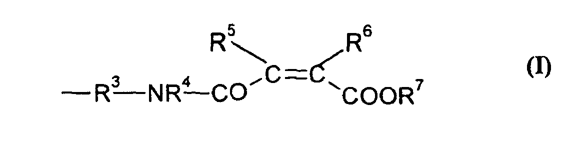 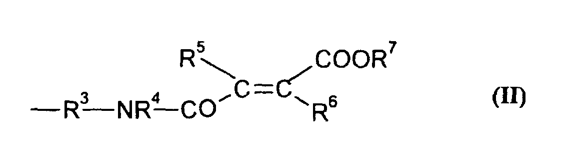 in which :
- R³ is a linear or branched, divalent alkylene radical preferably having from 1 to 10 carbon atoms ;
- the symbols R⁴, R⁵ and R⁶, which may be identical or different, each represent a hydrogen atom or a monovalent hydrocarbon group preferably chosen from among the linear or branched alkyls having from 1 to 6 carbon atoms or a phenyl radical;
- R⁷ is a monovalent hydrocarbon group preferably chosen from among the linear or branched alkyls having from 1 to 6 carbon atoms or a phenyl radical.

5. Composition according to Claim 4, in which the component C is an alkoxysilane having the general formula (III) below: 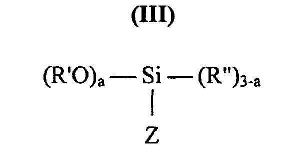 in which :
- the radicals R', which may be identical or different from one another, each represent a monovalent hydrocarbon group chosen from among the linear or branched alkyls having from 1 to 4 carbon atoms, the linear or branched alkoxylalkyls having from 2 to 6 carbon atoms, the cycloalkyls having from 5 to 8 carbon atoms, or a phenyl radical;
- the symbols R", which may be identical or different from one another, each represent a monovalent hydrocarbon group chosen from among the linear or branched alkyls having from 1 to 6 carbon atoms, the cycloalkyls having from 5 to 8 carbon atoms, or a phenyl radical;
- Z = -L-X; L, which is connected to the silicon atom, being a linear or branched divalent connecting group preferably having from 1 to 16 carbon atoms and optionally comprising one or more heteroatoms preferably chosen from among S, O or N ;
- a is equal to 1, 2 or 3.

6. Rubber composition according to Claims 4 or 5, **characterised in that** in the formulas (I), (II) and (III) above, the following characteristics are satisfied:
- the radicals R' in formula (III) are chosen from among the radicals : methyl, ethyl, n-propyl, isopropyl, n-butyl, CH₃OCH₂-, CH₃OCH₂CH₂-, CH₃OCH(CH₃)CH₂- ;
- the radicals R" in formula (III) are chosen from among the radicals : methyl, ethyl, n-propyl, isopropyl, n-butyl, n-pentyl, cyclohexyl or phenyl;
- the radical R³ in formulas (I) or (II) represents an alkylene residue having the following formulas : -(CH₂)₂- , -(CH₂)₃-, -(CH₂)₄-, -CH₂-CH(CH₃)-, -(CH₂)₂-CH(CH₃)-(CH₂)- , -(CH₂)₃-O-(CH₂)₃- , -(CH₂)₃-O-CH₂-CH(CH₃)-CH₂- ;
- the radicals R⁴, R⁵ and R⁶ in formulas (I) or (II) are chosen from among hydrogen or the radicals : methyl, ethyl, n-propyl, isopropyl or n-butyl ;
- the radical R⁷ in formulas (I) or (II) is chosen from among the radicals : methyl, ethyl, n-propyl or isopropyl.

7. Composition according to Claims 5 or 6, **characterised in that** the alkoxysilane with general formula (III) has the specific formula (III-1) : 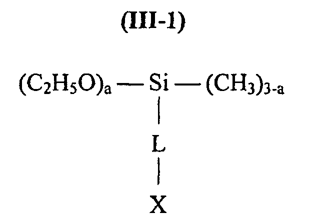 in which :
- L = -R3-NR4- (in accordance with formulas I and II above) ;
- X is the maleamic-ester function with formula (I) or the fumaramic-ester function with formula (II) above.

8. Composition according to Claim 7, **characterised in that** the alkoxysilane is the methyl ester of N[γ-propyl(methyl-diethoxy)silane] maleamic acid having formula (III-2) :

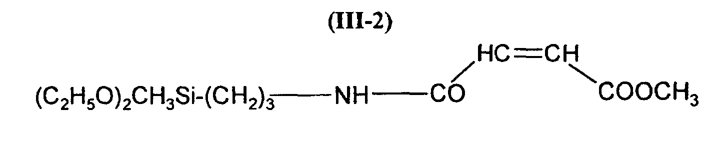

9. Composition according to Claim 7, **characterised in that** the alkoxysilane is the methyl ester of N[γ-propyl(methyl-diethoxy)silane] fumaramic acid having formula (III-3) :

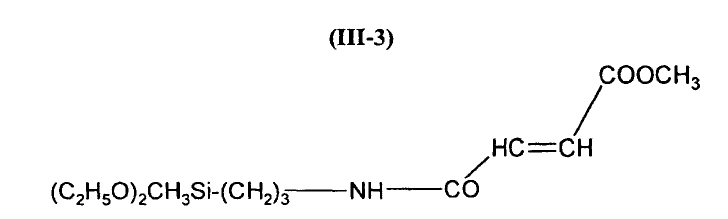

10. Composition according to any of Claims 1 to 9, containing between 10 and 200 phr of component B.

11. Composition according to any of Claims 1 to 10, in which the quantity of component C represents between 0.5 and 20% relative to the weight of component B.

12. Composition according to Claim 11, in which the quantity of component C represents less than 10% relative to the weight of component B.

13. Composition according to any of Claims 1 to 12, in which component B is majoritarily silica.

14. Composition according to any of Claims 1 to 12, in which component B is majoritarily alumina.

15. Composition according to any of Claims 1 to 14, in which component B constitutes the totality of the reinforcing filler.

16. Composition according to any of Claims 1 to 14, in which component B is used in a mixture with carbon black.

17. Composition according to any of Claims 2 to 16, in which component A consists majoritarily of natural rubber, synthetic polyisoprene, a copolymer of isoprene or a mixture of these elastomers.

18. Composition according to Claim 17, in which component A consists exclusively of natural rubber or synthetic polyisoprene.

19. Composition according to any of Claims 1 to 18, **characterised in that** it is in the vulcanised state.

20. A process for preparing a rubber composition usable for the manufacture of tyres, **characterised in that** there are incorporated in :
(i) - at least one diene elastomer (component A), at least
(ii) - one white filler as a reinforcing filler (component B), and
(iii) - a (white filler/diene elastomer) coupling agent bearing at least two functions denoted "Y" and "X" (component C), which can be grafted on the one hand to the white filler by means of the Y function and on the other hand to the elastomer by means of the X function, the X function being an ester function of an unsaturated α-β acid bearing a carbonyl group on its γ position and having the general formula (X) : 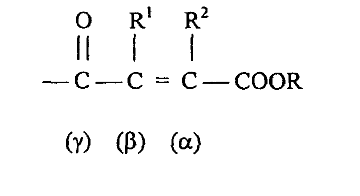 in which R, R¹ and R², which may be identical or different, each represent a monovalent hydrocarbon radical or, in the case of R¹ and R², also a hydrogen atom,
and **in that** the entire mixture is kneaded thermo-mechanically in one or more stages until a maximum temperature between 110°C and 190°C is reached.

21. Process according to Claim 20, **characterised in that** the maximum kneading temperature is between 130°C and 180°C.

22. Use of a rubber composition according to any of Claims 1 to 18 for the manufacture of tyres or semi-finished products intended for tyres, these semi-finished products being selected in particular from the group comprising treads, underlayers for such treads, crown plies, sidewalls, carcass plies, beads, protectors, inner tubes or airtight internal rubbers for tubeless tyres.

23. A tyre in the uncured state comprising a rubber composition according to any of Claims 1 to 18.

24. A tyre in the cured state comprising a rubber composition according to Claim 19.

25. A semi-finished product for tyres, comprising a rubber composition according to any of Claims 1 to 18, this semi-finished product being selected in particular from among the group comprising treads, underlayers for these treads, crown plies, sidewalls, carcass plies, beads, protectors, inner tubes or airtight internal rubbers for tubeless tyres.

26. Semi-finished product according to Claim 25, consisting of a tyre tread .

27. A tyre tread according to Claim 26, **characterised in that** it is based on a rubber composition according to Claims 17 or 18.

28. The use as a (white filler/diene elastomer) coupling agent, in a rubber composition based on a diene elastomer reinforced with a white filler, of a compound bearing at least two functions denoted "Y" and "X" (component C), which can be grafted on the one hand to the white filler by means of the Y function and on the other hand to the elastomer by means of the X function, the X function being an ester function of an unsaturated α-β acid bearing a carbonyl group on its γ position and having the general formula (X) : 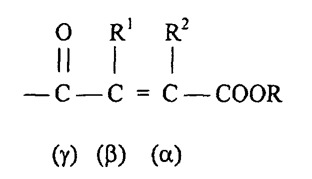 in which R, R¹ and R², which may be identical or different, each represent a monovalent hydrocarbon radical or, in the case of R¹ and R², also a hydrogen atom.

29. Use according to Claim 28, **characterised in that** the X function is a maleamic-ester or fumaramic-ester function respectively having the formulas (I) or (II) below : 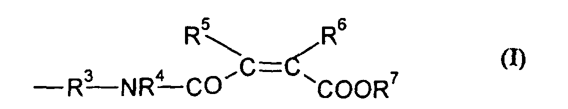 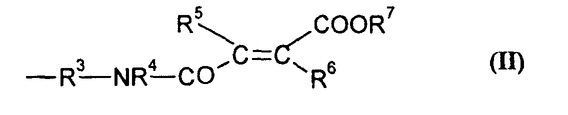 in which:
- R³ is a linear or branched, divalent alkylene radical preferably having from 1 to 10 carbon atoms ;
- the symbols R⁴, R⁵ and R⁶, which may be identical or different, each represent a hydrogen atom or a monovalent hydrocarbon group preferably chosen from among the linear or branched alkyls having from 1 to 6 carbon atoms or a phenyl radical ;
- R⁷ is a monovalent hydrocarbon group preferably chosen from among the linear or branched alkyls having from 1 to 6 carbon atoms or a phenyl radical.

30. Use according to Claims 28 or 29, the said diene elastomer being chosen from among the group which consists of the polybutadienes, natural rubber, the synthetic polyisoprenes, the copolymers of butadiene, the copolymers of isoprene and mixtures of these elastomers.

31. A process for coupling a white filler and a diene elastomer, in a rubber composition that can be used for the manufacture of tyres, **characterised in that** there are incorporated in :
(i) - at least one diene elastomer (component A), at least
(ii) - one white filler as a reinforcing filler (component B), and
(iii) - a (white filler/diene elastomer) coupling agent bearing at least two functions denoted "Y" and "X" (component C), which can be grafted on the one hand to the white filler by means of the Y function and on the other hand to the elastomer by means of the X function, the X function being an ester function of an unsaturated α-β acid bearing a carbonyl group on its γ position and having the general formula (X) : 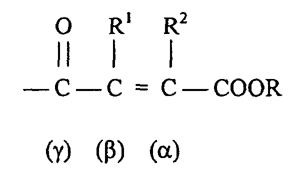 in which R, R¹ and R², which may be identical or different, each represent a monovalent hydrocarbon radical or, in the case of R¹ and R², also a hydrogen atom,
and **in that** the entire mixture is kneaded thermo-mechanically in one or more stages, until a maximum temperature between 110°C and 190°C is reached.

32. Process according to Claim 31, **characterised in that** the maximum kneading temperature is between 130°C and 180°C.

33. Process according to Claims 31 or 32, **characterised in that** the X function is a maleamic-ester or fumaramic-ester function respectively having the formulas (I) and (II) below: 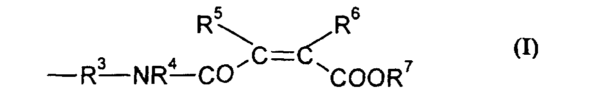 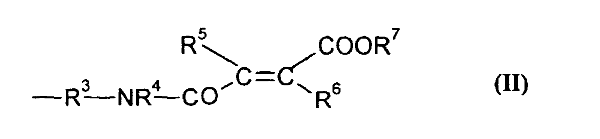 in which:
- R³ is a linear or branched, divalent alkylene radical preferably having from 1 to 10 carbon atoms ;
- the symbols R⁴, R⁵ and R⁶, which may be identical or different, each represent a hydrogen atom or a monovalent hydrocarbon group preferably chosen from among the linear or branched alkyls having from 1 to 6 carbon atoms or a phenyl radical;
- R⁷ is a monovalent hydrocarbon group preferably chosen from among the linear or branched alkyls having from 1 to 6 carbon atoms or a phenyl radical.

34. Process according to any one of Claims 31 to 33, the diene elastomer being selected from the group which consists of polybutadienes, natural rubber, the synthetic polyisoprenes, the copolymers of butadiene, the copolymers of isoprene and mixtures of these elastomers.
